# EUROPEAN PATENT APPLICATION

(11) **EP 3 854 501 A1**
(43) Date of publication of application: **28.07.2021**
(21) Application number: 19863718.3
(22) Date of filing: 14.03.2019
(51) Int. Cl.: B22F 1/00, B22F 3/105, B22F 3/16, B33Y 70/00

(54) **POWDER FOR METAL ADDITIVE MANUFACTURING, METHOD FOR PRODUCING SAME, ADDITIVE MANUFACTURING DEVICE, AND CONTROL PROGRAM THEREFOR**

(30) Priority: 19.09.2018 WO PCT/JP2018/034700
(71) Applicant: Technology Research Association For Future Additive Manufacturing, Chuo-ku, Tokyo 103-0027 (JP)
(72) Inventor: CHIBA Akihiko, Sendai-shi, Miyagi 980-8577 (JP); KUDO Takahiro, Sendai-shi, Miyagi 980-8577 (JP); DAINO Youhei, Sendai-shi, Miyagi 980-8577 (JP); AOYAGI Kenta, Sendai-shi, Miyagi 980-8577 (JP)
(74) Representative: TBK
(86) International application number: PCT/JP2019/010679
(87) International publication number: WO 2020/059183

(57) **Abstract**

This invention provides, by simple mechanical treatment, a metal powder that generates no smoke phenomenon when laminating and shaping a metal object even when decreasing a preheating temperature. In the metal powder, a solidification structure including a dendritic structure on the surface of the metal powder has been flattened. The solidification structure including the dendritic structure has been flattened by mechanical treatment including collision treatment of the metal powder. The mechanical treatment is performed by heating the metal powder to 100°C to 300°C. The metal powder is a metal powder that is heated to a predetermined temperature and whose capacitance component of a measured impedance becomes zero. This metal powder is a powder of a metal alloy produced by an atomization process or a plasma rotation electrode process. The metal alloy includes a nickel-based alloy, a cobalt-chrome alloy, an iron-based alloy, an aluminum alloy, and a titanium alloy.

## Description

This application is based upon and claims the benefit of priority from PCT patent application No. PCT/JP2018/034700 filed on September 19, 2018, the disclosure of which is incorporated herein in its entirety by reference.

### TECHNICAL FIELD

The present invention relates to a metal material for laminating and shaping a metal object.

### BACKGROUND ART

In the above technical field, patent literature 1 discloses a three-dimensional laminating and shaping technique using a metal powder. In patent literature 1, when melting an alloy powder by an electron beam, preheating (or pre-sintering) is performed in advance at a temperature which is 50% to 80% of the melting point of the alloy.

### CITATION LIST

### PATENT LITERATURE

Patent literature 1: Japanese Patent Laid-Open No. 2016-023367

### SUMMARY OF THE INVENTION

### TECHNICAL PROBLEM

As described above, in electron-beam laminating and shaping, preheating of a metal powder is performed as a measure against charge-up. The preheating temperature at this time is desirably as low as possible, because the higher the preheating temperature, the longer the preheating time and the longer the cooling time after the completion of shaping. In addition, as the preheating temperature rises, bonding between metal particles becomes strong, and this makes the removal of an unnecessary power after laminating and shaping difficult. If, however, the preheating temperature is made too low, a smoke phenomenon is generated, resulting in a failure in laminating and shaping.

Therefore, there is a demand for a technique of decreasing the preheating temperature without generating a smoke phenomenon.

The present invention provides a technique of solving the above-described problem.

### SOLUTION TO PROBLEM

One example aspect of the present invention provides a metal powder to be used for laminating and shaping a metal object, wherein a solidification structure including a dendritic structure on a surface of the metal powder has been flattened.

Another example aspect of the present invention provides a method of manufacturing a metal powder to be used for laminating and shaping a metal object, comprising:
producing the metal powder by an atomization process; and
executing mechanical treatment including collision treatment of the metal powder.

Still other example aspect of the present invention provides a metal laminating and shaping apparatus for lamination and shaping a metal object by selectively melting and solidifying a powder bed of a metal powder by an electron beam, comprising:
a mechanical treatment unit that performs mechanical treatment including collision treatment to the metal powder; and
a powder bed generator that generates the powder bed using the metal powder treated by said mechanical treatment unit.

Still other example aspect of the present invention provides a program of controlling a metal laminating and shaping apparatus for laminating and shaping a metal object by selectively melting and solidifying a powder bed of a metal powder by an electron beam, for causing a computer to execute a method, comprising:
instructing a mechanical treatment unit to perform mechanical treatment including collision treatment to the metal powder; and
instructing a powder bed generator to generate the powder bed using the metal powder having undergone the mechanical treatment in accordance with the instructing the mechanical treatment unit.

### ADVANTAGEOUS EFFECTS OF INVENTION

According to the present invention, it is possible to provide, by simple mechanical treatment, a metal powder that generates no smoke phenomenon when laminating and shaping a metal object even when decreasing a preheating temperature.

### BRIEF DESCRIPTION OF DRAWINGS

Fig. 1 is a table showing a metal powder after mechanical pretreatment according to Example 1 of the present invention;
Fig. 2 is a table showing the surface image (SEM) of the metal powder after the mechanical pretreatment according to Example 1 of the present invention;
Fig. 3 is a view showing the surface analysis result (XPS) of the metal powder after the mechanical pretreatment according to Example 1 of the present invention;
Fig. 4A is a graph showing a temperature change in resistance value of the metal powder after the mechanical pretreatment according to Example 1 of the present invention;
Fig. 4B is a view showing a powder electrical resistance measurement apparatus that measures the resistance value of the metal powder according to Example 1 of the present invention;
Fig. 4C is a view showing a temperature pattern and a powder electrical resistance measurement jig that measures the resistance value of the metal powder according to Example 1 of the present invention;
Fig. 4D is a view for explaining the powder electrical resistance measurement principle of measuring the resistance value of the metal powder according to Example 1 of the present invention;
Fig. 4E is a view showing a measurement circuit and a measurement connection for measuring the resistance value of the metal powder according to Example 1 of the present invention;
Fig. 5A is a view showing a change in impedance of the metal powder after the mechanical pretreatment according to Example 1 of the present invention;
Fig. 5B is a view showing a change in capacitance component obtained from the impedance of the metal powder after the mechanical pretreatment according to Example 1 of the present invention;
Fig. 5C is a view for explaining the powder electrical resistance measurement principle of measuring the impedance of the metal powder according to Example 1 of the present invention;
Fig. 5D is a view showing a measurement circuit and a measurement connection for measuring the impedance of the metal powder according to Example 1 of the present invention;
Fig. 6A is a table showing the result of a smoke test using the metal powder after the mechanical pretreatment according to Example 1 of the present invention;
Fig. 6B is a view for explaining a smoke test method using the metal powder after the mechanical pretreatment according to Example 1 of the present invention;
Fig. 7 is a view showing the principle of a jet mill that performs the mechanical pretreatment according to Example 1 of the present invention;
Fig. 8A is a view showing a surface image (SEM) of a metal powder after mechanical pretreatment according to Example 2 of the present invention;
Fig. 8B is a graph showing a change in impedance of the metal powder after the mechanical pretreatment according to Example 2 of the present invention;
Fig. 8C is a view showing a ball mill that performs the mechanical pretreatment and the principle of the ball mill according to Example 2 of the present invention;
Fig. 9 is a table showing examples of alloy powders usable in an example embodiment of the present invention;
Fig. 10A is a block diagram showing the arrangement of a metal laminating and shaping apparatus according to the example embodiment of the present invention;
Fig. 10B is a block diagram showing the arrangement of a laminating and shaping device including a mechanical treatment unit according to the example embodiment of the present invention;
Fig. 11 is a view showing an example of display of an information processing device of the metal laminating and shaping apparatus according to the example embodiment of the present invention;
Fig. 12 is a flowchart illustrating the processing procedure of the information processing device of the metal laminating and shaping apparatus according to the example embodiment of the present invention;
Fig. 13 is a view showing a ball mill that performs mechanical pretreatment and the operation conditions of the ball mill according to Example 3 of the present invention;
Fig. 14A is a view showing surface images (SEM) of a metal powder (Inconel 718/IN718) before and after the mechanical pretreatment according to Example 3 of the present invention;
Fig. 14B is a view showing temperature changes in resistance value and impedance of the metal powder (Inconel 718/IN718) after the mechanical pretreatment according to Example 3 of the present invention;
Fig. 14C is a view showing a change in capacitance component obtained from the impedance of the metal powder (Inconel 718/IN718) after the mechanical pretreatment according to Example 3 of the present invention;
Fig. 14D is a view showing the XPS analysis result of the metal powder (Inconel 718/IN718) after the mechanical pretreatment according to Example 3 of the present invention;
Fig. 15A is a view showing surface images (SEM) of a metal powder (Titanium 64/Ti64) before and after the mechanical pretreatment according to Example 3 of the present invention;
Fig. 15B is a view showing temperature changes in resistance value and impedance of the metal powder (Titanium 64/Ti64) after the mechanical pretreatment according to Example 3 of the present invention;
Fig. 15C is a view showing the XPS analysis result of the metal powder (Titanium 64/Ti64) after the mechanical pretreatment according to Example 3 of the present invention;
Fig. 16A is a view showing surface images (SEM) of a metal powder (titanium-aluminum alloy/TiAl) before and after the mechanical pretreatment according to Example 3 of the present invention;
Fig. 16B is a view showing temperature changes in resistance value and impedance of the metal powder (titanium-aluminum alloy/TiAl) after the mechanical pretreatment according to Example 3 of the present invention;
Fig. 16C is a view showing the XPS analysis result of the metal powder (titanium-aluminum alloy/TiAl) after the mechanical pretreatment according to Example 3 of the present invention;
Fig. 17A is a view showing surface images (SEM) of a metal powder (copper powder/Cu) before and after the mechanical pretreatment according to Example 3 of the present invention;
Fig. 17B is a view showing temperature changes in resistance value and impedance of the metal powder (copper powder/Cu) after the mechanical pretreatment according to Example 3 of the present invention;
Fig. 18 is a view showing a ball mill that performs mechanical pretreatment and operation conditions of different times according to Example 4 of the present invention;
Fig. 19 is a view showing surface images (SEM) of a metal powder (Inconel 718/IN718) after the mechanical pretreatment for the different times according to Example 4 of the present invention;
Fig. 20 is a view showing the state of the metal powder (Inconel 718/IN718) after the mechanical pretreatment for a time exceeding an appropriate time according to Example 4 of the present invention;
Fig. 21 is a graph showing temperature changes in resistance value of the metal powder (Inconel 718/IN718) after the mechanical pretreatment for the different times according to Example 4 of the present invention;
Fig. 22 is a view showing temperature changes in impedance of the metal powder (Inconel 718/IN718) after the mechanical pretreatment for the different times according to Example 4 of the present invention;
Fig. 23 is a table showing the result of a smoke test using the metal powder after the mechanical pretreatment according to Examples 3 and 4 of the present invention;
Fig. 24 is a view for explaining a smoke test method using the metal powder after the mechanical pretreatment according to Examples 3 and 4 of the present invention; and
Fig. 25 is a view showing smoke test conditions using the metal powder after the mechanical pretreatment according to Examples 3 and 4 of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [Example Embodiment of Metal Powder]

A metal powder according to this example embodiment will be described in detail below.

### «Metal Powder of This Example Embodiment»

A metal powder according to this example embodiment is used as a material of metal laminating and shaping. For example, an alloy powder of nickel-based alloy Inconel 718 (registered trademark: Inconel 718/UNS Number N07718), which is used as a jet engine and rocket part, is used. Note that the metal powder is not limited to the nickel-based alloy. The present invention is also applied to, for example, a pure metal or an alloy such as a cobalt-chrome alloy used as a metal part for organism like an artificial joint, a steel-based alloy including an iron alloy or stainless alloy, an aluminum-based alloy, a titanium-based alloy, or a copper-based alloy, and the same effect is obtained.

As a method of manufacturing a metal powder, a plasma atomization process, a gas atomization process, a plasma rotation electrode process, or the like is used.

The particle size range of the above-mentioned alloy powder is preferably 10 to 200 µm, more preferably 25 to 150 µm, and further preferably 45 to 105 µm.

### <Metal Powder for laminating and shaping of This Example Embodiment>

In electron beam laminating and shaping, preheating (pre-sintering) of a metal powder is performed as a measure against charge-up, and the preheating temperature is desirably as low as possible. This is because as the higher the preheating temperature, the longer the preheating time and the longer the cooling time after the completion of shaping are necessary. In addition, as the preheating temperature rises, bonding between metal particles becomes strong, that makes the removal of an unnecessary powder after laminating and shaping difficult. The preheating temperature can be decreased by increasing the conductivity of the metal powder. This is because as the conductivity between metal particles increases, the sintering properties using an electron beam improve, that facilitates short-time sintering, so the sintering temperature decreases.

On the other hand, if the preheating temperature is made too low, a smoke phenomenon is generated, resulting in a failure in laminating and shaping itself. The present inventors have found that the smoke phenomenon is caused by a Coulomb repulsive force (repulsive force) which is generated when negative charges are accumulated in the capacitance component of an oxide portion on the surface of the metal powder at the time of irradiation with an electron beam.

Therefore, in this example embodiment, mechanical pretreatment including collision between metal particles in the metal powder is performed for the metal alloy powder to make the capacitance component of the oxide portion approach zero at room temperature or a predetermined temperature, for example, 100°C to 200°C while improving the conductivity, thereby manufacturing a metal powder for laminating and shaping a metal object, using which metal powder the preheating temperature can be decreased without generating a smoke phenomenon.

### (Mechanical Pretreatment Method)

As mechanical pretreatment, an existing metal powder was charged to a jet mill, and metal particles in the metal powder were made to collide each other, thereby changing the shape of an oxide on the surface of the metal powder. Furthermore, as the mechanical pretreatment, the existing metal powder was charged to a ball mill, and metal particles in the metal powder were made to collide each other, thereby changing the shape of an oxide on the surface of the metal powder. Note that the mechanical pretreatment is not limited to treatment by the jet mill or the ball mill. Any treatment of making the existing metal particles collide each other to change the shape of an oxide on the surface of the metal powder can be performed. For example, a bead mill or a colloid mill may be used. Note that to reduce the capacitance component of the oxide portion, it is desirable to heat the metal powder to 100°C to 300°C at the time of the mechanical pretreatment of the metal powder.

### (Result of Mechanical Pretreatment)

With reference to the SEM image of the surface of the metal powder after the mechanical pretreatment, it was found that a solidification structure including a dendritic structure on the surface of the metal powder was flattened by the mechanical pretreatment. Furthermore, it was found that, as a result of measuring the impedance of the metal powder after the mechanical pretreatment, the capacitance component of the metal powder approached zero at 100°C to 200°C. That is, when the solidification structure including the dendritic structure was flattened, the capacitance component of the metal powder became smaller and disappeared at a low temperature. In addition, it was found that, as a result of measuring the impedance of the metal powder after the mechanical pretreatment, the capacitance component of the metal powder also approached zero at room temperature (RT).

### (Improvement of Conductivity and Decrease in Sintering Temperature)

The electrical resistance value/electrical resistivity of the metal powder having undergone mechanical pretreatment according to this example embodiment decreased, when compared to an alloy powder having undergone no mechanical pretreatment, and the capacitance component of the mechanically pretreated metal powder approached zero at a low temperature. Therefore, it is indicated that the conductivity of the metal powder of this example embodiment improved and the capacitance component of the metal powder approached zero at a low temperature, thereby making it possible to decrease the preheating temperature.

In a smoke test in which the preheating temperature is decreased, it was apparent that the metal powder having undergone the mechanical pretreatment according to this example embodiment made the lower limit of a smoke start temperature decreased, when compared to the lower limit of a smoke start temperature of a metal alloy powder having undergone no mechanical pretreatment. More specifically, the lower-limiting temperature was less than 500°C when using the mechanically pretreated metal powder of this example embodiment, but exceeded 950°C when using the metal alloy powder having undergone no mechanical pretreatment.

Accordingly, it was possible to decrease the preheating temperature from 1,150°C to 600°C - 500°C.

### <<Effects of This Example Embodiment>>

According to this example embodiment, the following effects can be expected by performing the mechanical pretreatment.

That is, the pre-sintering temperature can be decreased. For example, when performing the mechanical pretreatment on the Inconel 718 powder, it was possible to decrease a normal preheating temperature from 1,150°C to 600°C - 500°C without generating a smoke phenomenon. Furthermore, when performing the mechanical pretreatment on the titanium 64 powder or titanium-aluminum powder, it was possible to decrease a normal preheating temperature from 1,150°C to 600°C - 500°C without generating a smoke phenomenon.

The productivity improved because the total laminating and shaping time was shortened by decreasing the preheating temperature. In addition, the decrease in preheating temperature facilitated removing an unnecessary powder after laminating and shaping.

### EXAMPLES

Examples 1 to 4 according to this example embodiment and a comparative example will be explained below. Example 1 is a case in which the mechanical pretreatment is performed by the jet mill. Examples 2 to 4 are cases in which the mechanical pretreatment is performed by the ball mill. The comparative example is a case in which no mechanical pretreatment is performed.

### [Example 1]

### <<Metal Powder Used>>

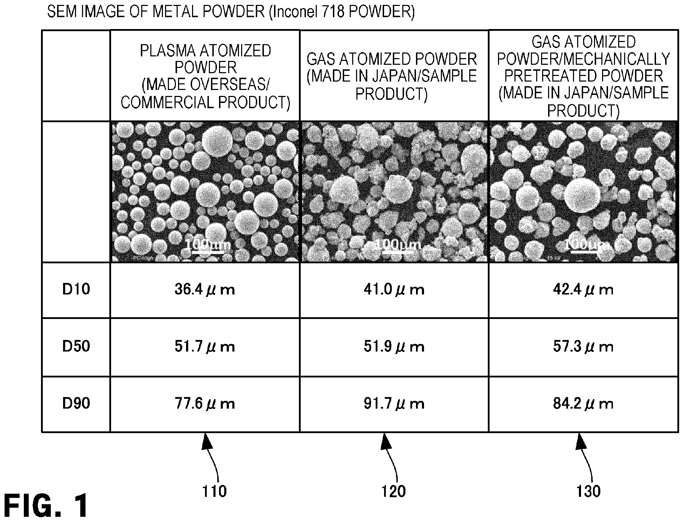

In this example, a metal powder of nickel-based alloy Inconel 718 (registered trademark) generated by the gas atomization process was used. Fig. 1 shows SEM (Scanning Electron Microscope) images and grain size distributions 110-130.

### <<Mechanical Pretreatment>>

As the mechanical pretreatment of the alloy powder, the mechanical pretreatment using the jet mill was performed.

### (Jet Mill Apparatus)

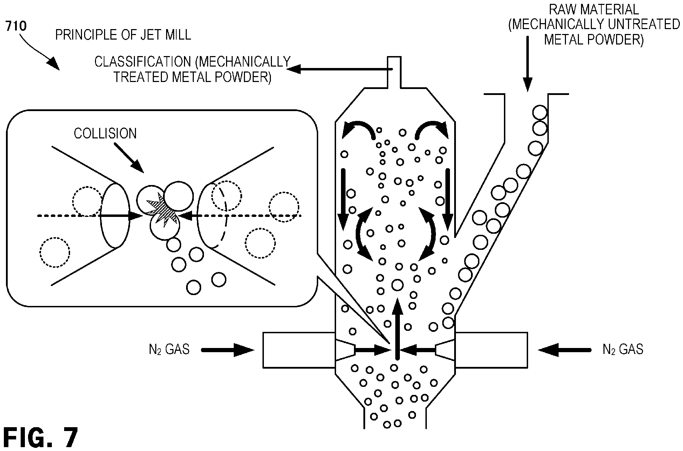

As the jet mill, a pneumatic pulverizer super jet mill (SJ-1500) available from Nisshin Engineering was used. The pressure was set to 0.65 MPa and the supply speed of the metal powder was set to 5 kg/hr. Note that Fig. 7 shows the principle of the jet mill. The charged, mechanically untreated metal powder was stirred by an ejected high-pressure gas (N2 gas in Fig. 7) and metal particles repeatedly collided each other. Then, the mechanically treated metal powder was discharged. Note that the metal powder was heated to 100°C to 300°C.

### <<Physical and Scientific Characteristics of Surface of Metal Powder after Mechanical Pretreatment>>

SEM images of powder particles after the mechanical pretreatment and the powder particles without the mechanical pretreatment were observed and grain size distributions were examined. Fig. 1 shows the SEM images and the grain size distributions.

Fig. 1 comparatively shows the SEM image and a grain size distribution 110 of Inconel 718 by the plasma atomization process of a commercial product, the SEM image and the grain size distribution 120 of Inconel 718 by the gas atomization process, and the SEM image and a grain size distribution 130 of Inconel 718 by the gas atomization process after performing the mechanical pretreatment.

Referring to Fig. 1, the grain sizes were averaged by the mechanical pretreatment. However, in the overall SEM image and the grain size distribution, there was no difference in shape which was considered to lead to a reduction in preheating. That is, it was found that the mechanical pretreatment (stirring by a high-speed high-pressure air flow) removed a fine powder. Furthermore, when compared to a plasma atomized powder, the powder had no spherical shape, was slightly deformed, and had an end face generated. However, with respect to the grain size distribution, grain sizes were almost equal to each other without any large difference.

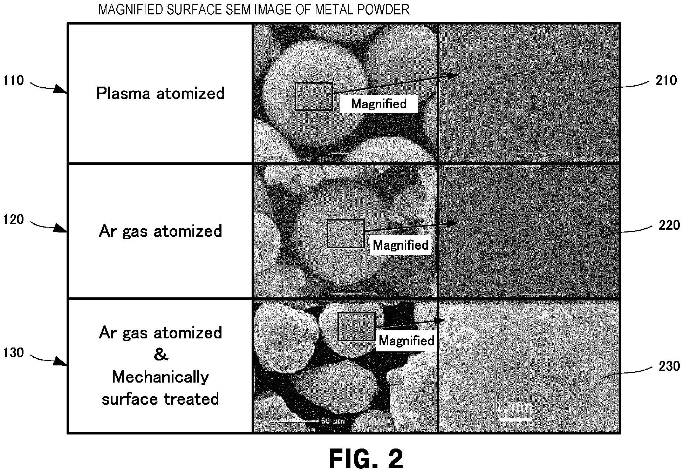

Fig. 2 comparatively shows a magnified SEM image 230 of the surface of a powder particle after the mechanical pretreatment and magnified SEM images 210 and 220 of the surfaces of powder particles without the mechanical pretreatment.

Referring to Fig. 2, it was found that the solidification structure including the dendritic structure (dendrite crystal) found in the magnified SEM image 210 or 220 was flattened in the magnified SEM image 230 by collision between powder particles in the mechanical pretreatment. The flattening (decrease) of the solidification structure including the dendritic structure leads to a reduction in preheating. That is, the dendritic structure was found in the powder before the mechanical pretreatment but the dendritic structure was not found after the mechanical pretreatment and the surface was flat. Therefore, the existence of the dendritic structure has influenced the conductivity and capacitance component of the surface of the metal powder.

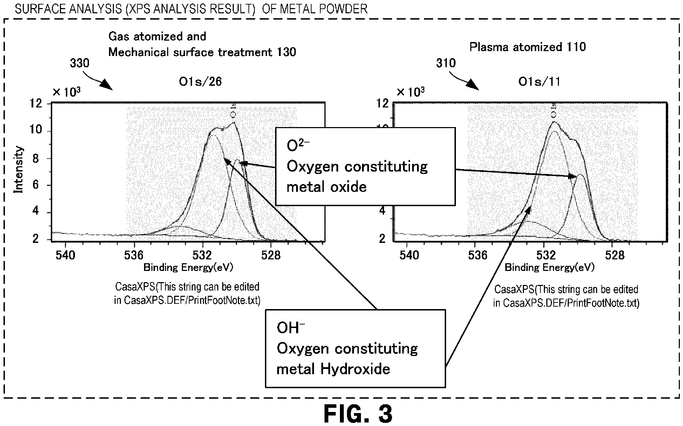

Fig. 3 comparatively shows an XSP (X-ray photoelectron Spectroscopy) analysis result 330 of the surface of the powder particle after the mechanical pretreatment and an XSP analysis result 310 of the surface of the powder particle without the mechanical pretreatment.

Referring to Fig. 3, there was no large difference between the plasma atomized powder and the powder having undergone the mechanical pretreatment in an oxide layer of the surface, therefore, it is apparent that there was no change of chemical characteristics in the oxide layer.

### (Evaluation of Physical and Scientific Characteristics)

The following was estimated from the results of Figs. 1 to 3. It was found from Fig. 1 that there was no large difference with respect to the grain size distribution. It was found from Fig. 3 that there was no change of chemical characteristics in the oxide layer of the surface of the metal powder. Therefore, the oxide layer of the surface was changed due to the physical influence by the mechanical pretreatment, and it was determined from Fig. 2 that the existence of the dendritic structure on the surface of the metal powder had an influence to the conductivity and capacitance component.

### <<Electrical Characteristics of Metal Powder after Mechanical Pretreatment>>

As electrical characteristics of the metal powder after the mechanical pretreatment, a change in resistance value (resistivity) corresponding to a temperature change, and a change in impedance were measured.

### (Electrical Resistance Measurement Apparatus)

In this example, apparatuses that have measured the electrical resistance of the metal powder are as follows.
- Powder electrical resistance measurement apparatus TG26592 (Toei Scientific Industrial)
- Vacuum furnace for high-temperature powder resistance measurement TG26667 (Toei Scientific Industrial)

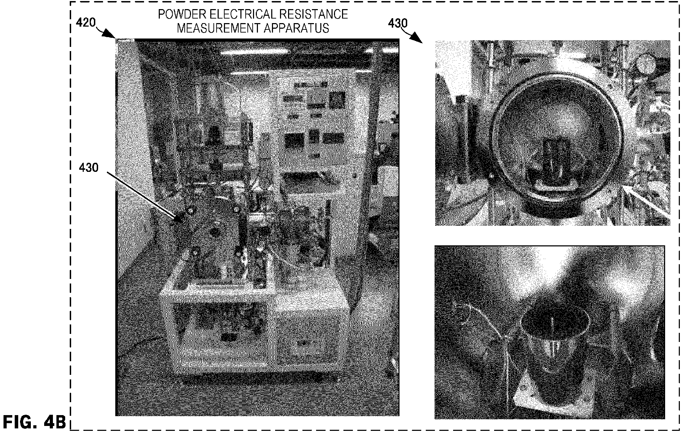

Measurement of the electrical resistance of the metal powder according to this example will be described with reference to Figs. 4B to 4E.

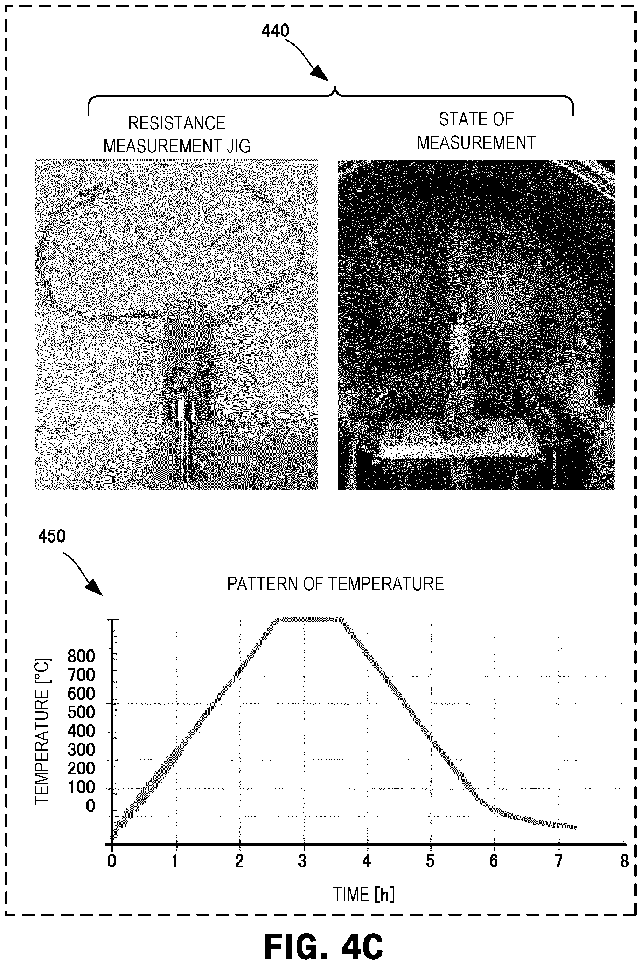

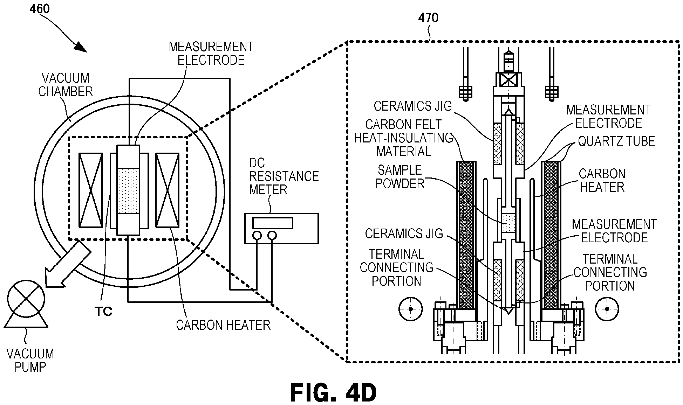

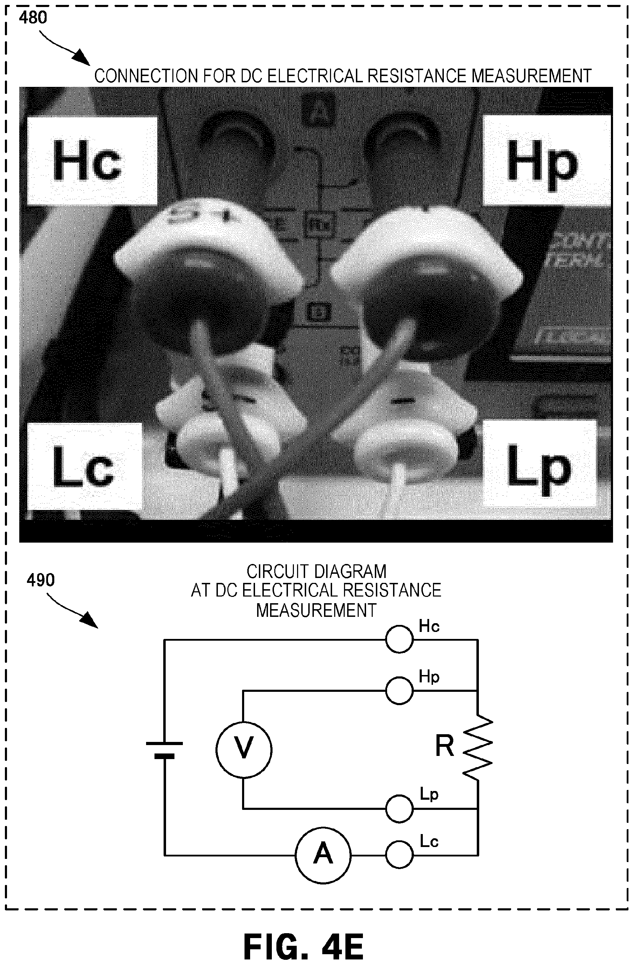

Fig. 4B is a view showing a powder electrical resistance measurement apparatus 420. The powder electrical resistance measurement apparatus 420 sets a metal powder as a measurement target in a vacuum furnace 430 for high-temperature powder resistance measurement, and measures the electrical resistance. Fig. 4C is a view showing a powder electrical resistance measurement jig and a state of measurement 440 and a pattern of temperature 450. Measurement conditions are, for example, "ambient pressure: less than 0.01 Pa, powder-filled cylinder inner diameter: φ10 mm, and powder height: 10 mm". As indicated by the pattern of temperature 450, the powder electrical resistance measurement apparatus 420 gradually increases the temperature of the metal powder from room temperature (RT) to 800°C and holds 800°C for a predetermined time, and then measures the electrical resistance while gradually decreasing the temperature. More specifically, the powder electrical resistance measurement apparatus 420 (1) starts from room temperature, (2) heats the metal powder to 800°C (at heating rate = 5°C/min), (3) holds the metal powder at 800°C for 1 hr, and (4) cools the metal powder to room temperature (cooling rate = 5°C/min). Fig. 4D is a view showing a measurement outline 460 in the powder electrical resistance measurement apparatus 420 and a structure 470 in the vacuum furnace 430 for high-temperature powder resistance measurement. The powder electrical resistance is measured by a DC resistance meter. Fig. 4E is a view showing a connection 480 for a DC electrical resistance measurement and a circuit diagram 490 at the DC electrical resistance measurement.

### (Electrical Resistance Measurement Result)

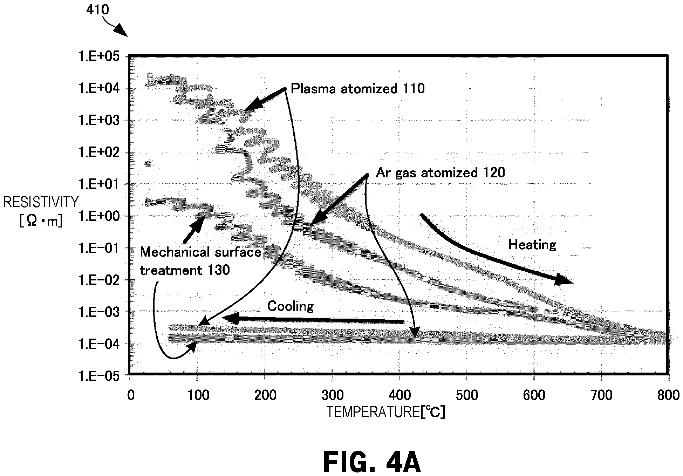

Fig. 4A is a graph showing a change in electrical resistance measured in accordance with the process in Figs. 4B to 4E.

Referring to Fig. 4A, as the temperature of the metal powder gradually increases from room temperature to 800°C, the electrical resistance decreases (the conductivity rises). Then, even if the metal powder is cooled from 800°C to room temperature, the electrical resistance (conductivity) remains almost unchanged. This is because an oxide film formed on the surface of the metal powder is thermally unstable, so the oxide film is made unstable as being heated to transition from a film structure having oxidative electrical characteristics to a film structure having metallic electrical characteristics.

Then, as is apparent from Fig. 4A, the metal powder 130 after the mechanical pretreatment has the electrical resistance lower (the conductivity higher) than that of the metal powder 110 or 120 without the mechanical pretreatment, consistently from the time at room temperature (RT) before heating. Therefore, even in a low-temperature region, the chargeability of the metal powder by irradiation with an electron beam decreases, thereby making it possible to decrease the preheating temperature.

### (Impedance Measurement Apparatus)

In this example, apparatuses that have measured the impedance of the metal powder are as follows.
- Powder AC resistance measurement system 29710 (Toei Scientific Industrial)
- Vacuum furnace for high-temperature powder resistance measurement TG26667 (Toei Scientific Industrial)

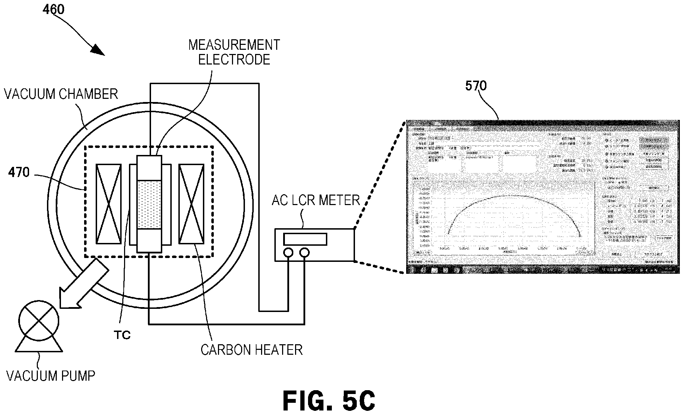

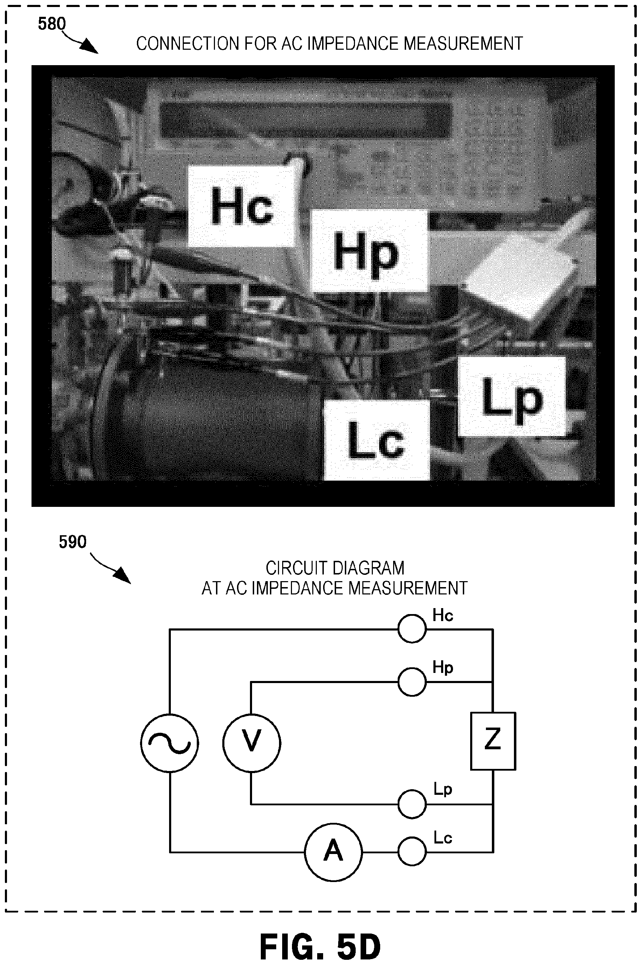

Measurement of the impedance of the metal powder according to this example will be described with reference to Figs. 5C and 5D. Note that impedance measurement is the same as electrical resistance measurement except for connection to an AC/LRC meter 570 for impedance measurement, and a description of components and processes (for example, the temperature pattern and the like) similar to those in Figs. 4B to 4E will be omitted. Fig. 5D is a view showing a connection 580 for an AC impedance measurement and a circuit diagram 590 at the AC impedance measurement.

### (Impedance Measurement Result)

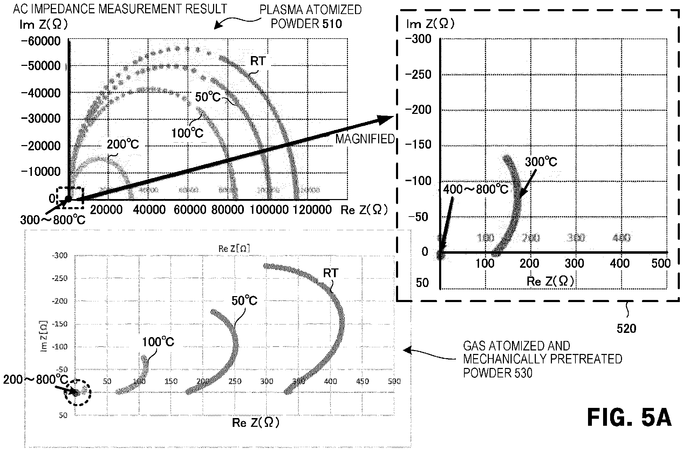

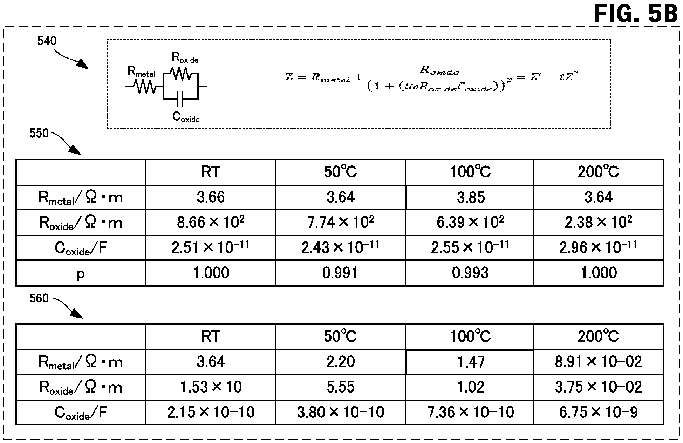

Fig. 5A is a view showing a change in impedance measured in accordance with Figs. 5B and 5C. Fig. 5A is a so-called Cole-Cole plot.

In a Cole-Cole plot 510 of the metal powder having undergone the plasma atomization process and without the mechanical pretreatment, the impedance has a 5-digit value (x0000 Ω) at 200°C. In a magnified plot 520 as well, the impedance has a 3-digit value (x00 Ω) at 300°C and has a low value at a temperature exceeding 400°C. On the other hand, the metal powder having undergone the gas atomization process and after the mechanical pretreatment according to this example has an impedance of less than a 3-digit value (100 Ω) at 100°C, and has an impedance of 1-digit value (x Ω) or less at a temperature exceeding 200°C.

### (Calculation Result of Capacitance Component)

Fig. 5B shows the calculation result of the capacitance component calculated by an equivalent circuit model 540 from the impedance measurement result shown in Fig. 5A. Fig. 5B shows a capacitance component 550 of the metal powder having undergone the plasma atomization process and without the mechanical pretreatment, and a capacitance component 560 of the metal powder having undergone the gas atomization process and after the mechanical pretreatment according to this example.

As shown in Fig. 5B, the capacitance component of the equivalent circuit model 540 decreases by the mechanical pretreatment according to this example, and approaches zero at low temperature (about 200°C), and therefore, no charges are accumulated on the surface of the metal powder. Therefore, a smoke phenomenon by irradiation with an electron beam is not generated (is suppressed).

### <<Smoke Test by Metal Powder after Mechanical Pretreatment>>

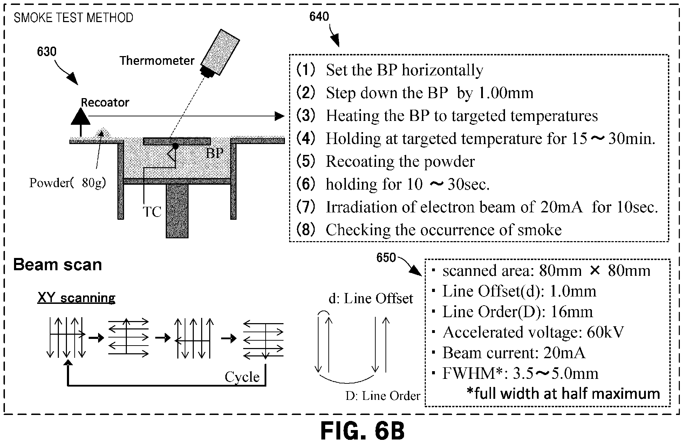

Fig. 6B is a view for explaining a smoke test method using the metal powder.

A smoke test was executed using a metal laminating and shaping apparatus 630 in accordance with a procedure 640 under conditions 650.

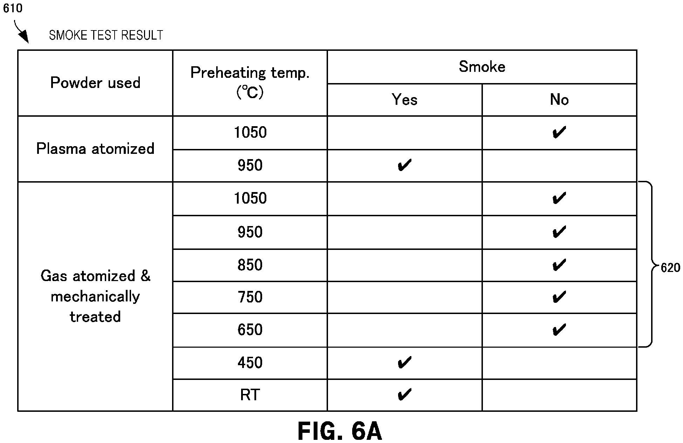

Fig. 6A is a table showing a result 610 of the smoke test using the metal powder. The result 610 shown in Fig. 6A shows the smoke test result of the metal powder having undergone the plasma atomization process without the mechanical pretreatment and the smoke test result of the metal powder having undergone the gas atomization process after the mechanical pretreatment according to this example. For the metal powder having undergone the plasma atomization process without the mechanical pretreatment, a smoke phenomenon was also generated by preheating at 950°C.

On the other hand, for the metal powder having undergone the gas atomization process after the mechanical pretreatment according to this example, a smoke phenomenon is generated by preheating up to 450°C but no smoke phenomenon is generated at 650°C. At temperatures 620 equal to or higher than 650°C, it is possible to set low-temperature preheating within a wide range in relation to the melting temperature at the time of shaping. Although not shown in Fig. 6A, even in preheating at 500°C to 600°C, no smoke phenomenon is generated.

### [Example 2]

### <<Mechanical Pretreatment>>

As the mechanical pretreatment of an alloy powder, mechanical pretreatment using a ball mill was executed.

### (Ball Mill Apparatus)

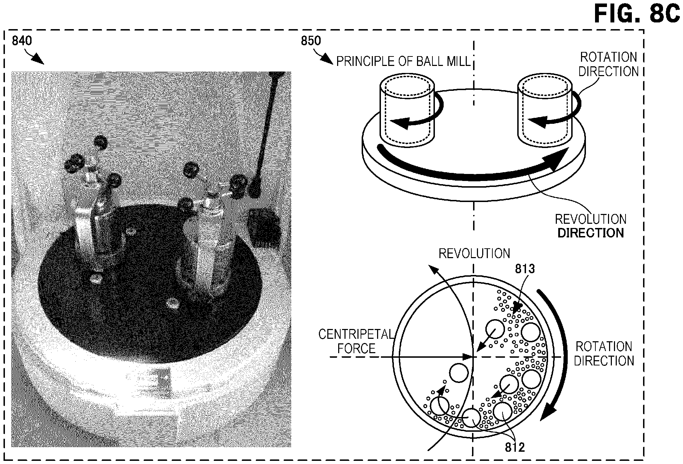

Fig. 8C shows a planetary ball mill 840 and a principle 850 of the ball mill.

As a ball mill, a planetary ball mill Classic Line P-7 (Fritsch in Germany) was used. Conditions were a disk rotation speed (revolution) of 800 rpm, a pot rotation speed (rotation) of 1,600 rpm, and a ball diameter of φ5 mm. As the treatment time, 15 min was set for revolution in a counterclockwise direction and 15 min was set for revolution in a clockwise direction. Note that the metal powder is desirably heated to 100°C to 300°C.

### <<Physical Characteristics of Surface of Metal Powder after Mechanical Pretreatment>>

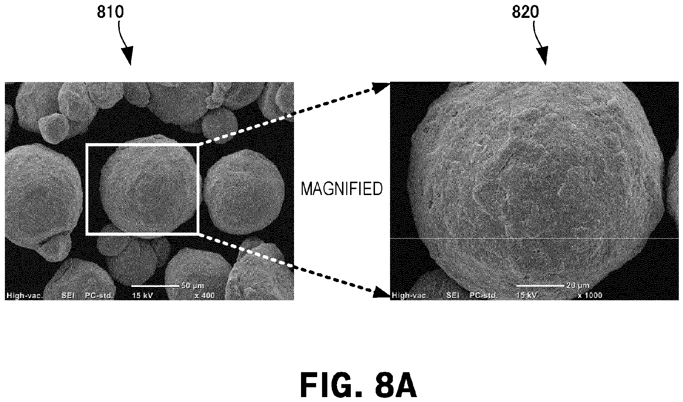

Fig. 8A is a view showing a surface image (SEM) 810 of the metal powder after mechanical pretreatment and a magnified SEM image 820 according to this example.

In the magnified SEM image 820, it is found that a solidification structure including a dendritic structure (dendrite crystal) is flattened by collision between powder particles in the mechanical pretreatment, as shown in Fig. 2. Therefore, as in Example 1, it is apparent that the impedance of the metal powder having undergone the mechanical pretreatment using the ball mill also becomes low.

### <<Electrical Characteristics of Surface of Metal Powder after Mechanical Pretreatment>>

The following measurement of the electrical characteristics of the surface of the metal powder was performed by apparatuses similar to those according to Example 1.

### (Impedance Measurement Result)

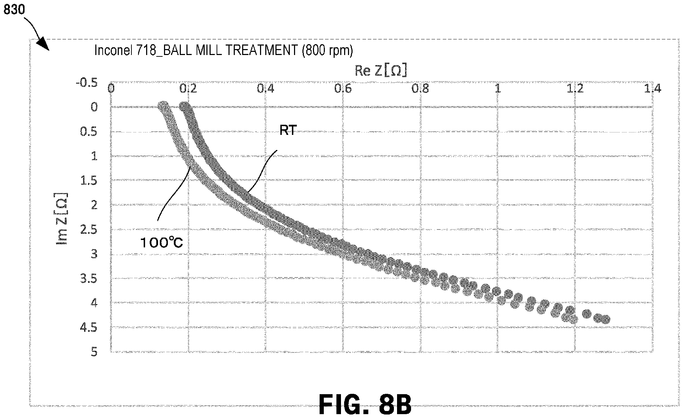

Fig. 8B is a view showing a change in impedance of the metal powder after the mechanical pretreatment according to this example. It is found that the impedance value is extremely lower than the impedance (see 510 in Fig. 5A) of the metal powder without the mechanical pretreatment. Thus, it is apparent that the capacitance component is also small, and approaches zero by low-temperature preheating.

### (Calculation Result of Capacitance Component)

A capacitance component was calculated from the impedance measurement result of Fig. 8B by the equivalent circuit model 540 of Fig. 5B but there was no capacitance component.

Therefore, similar to the mechanical pretreatment using the jet mill, by the mechanical pretreatment using the ball mill as well, it is possible to provide a metal powder for laminating and shaping that generates no smoke phenomenon even when decreasing the preheating temperature.

### [Example 3]

### <<Mechanical Pretreatment>>

As the mechanical pretreatment of an alloy powder, mechanical pretreatment using a ball mill was executed. In Example 3, mechanical pretreatment using a ball mill was executed using, as an alloy powder, titanium 64 (Ti64/Ti-6Al-4V) of a titanium alloy or titanium aluminum (TiAl) other than nickel alloy Inconel 718.

### (Ball Mill Apparatus)

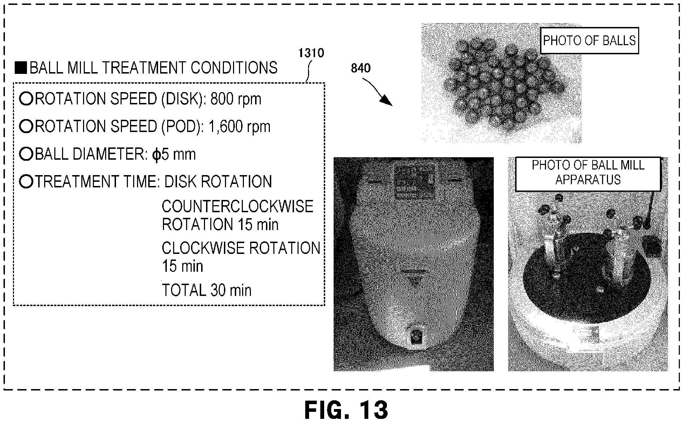

Fig. 13 shows a planetary ball mill 840 and treatment conditions 1310 by the ball mill. As a ball mill, a planetary ball mill Classic Line P-7 (Fritsch in Germany) was used. The conditions were a disk rotation speed (revolution) of 800 rpm, a pot rotation speed (rotation) of 1,600 rpm, and a ball diameter of φ5 mm. As the treatment time, 15 min was set for revolution in a counterclockwise direction and 15 min was set for revolution in a clockwise direction, that is, a total of 30 min was set. Note that the metal powder is desirably heated to 100°C to 300°C. Note also that in fact, the metal powder is not particularly heated in ball mill treatment, and when measuring the temperature of the container immediately after the treatment, the temperature is 100°C or more due to frictional heat of balls. Therefore, it is possible to more effectively obtain the effect of decrease of the electrical resistance and capacitance component by performing mechanical treatment while heating the metal powder to 100°C to 200°C.

### <Inconel 718/IN718>

As Inconel 718, a product available from Arcam was used. Table 1 shows the characteristics of Inconel 718 used.

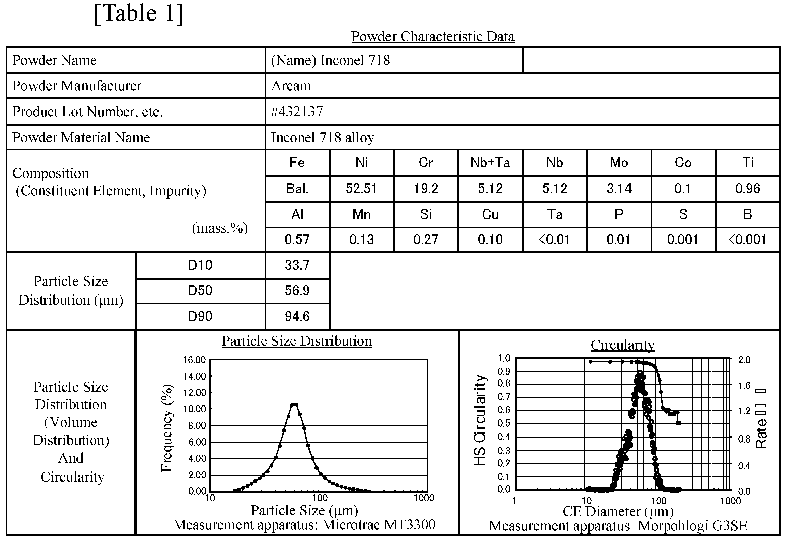

### <<Physical Characteristics of Surface of Metal Powder after Mechanical Pretreatment>>

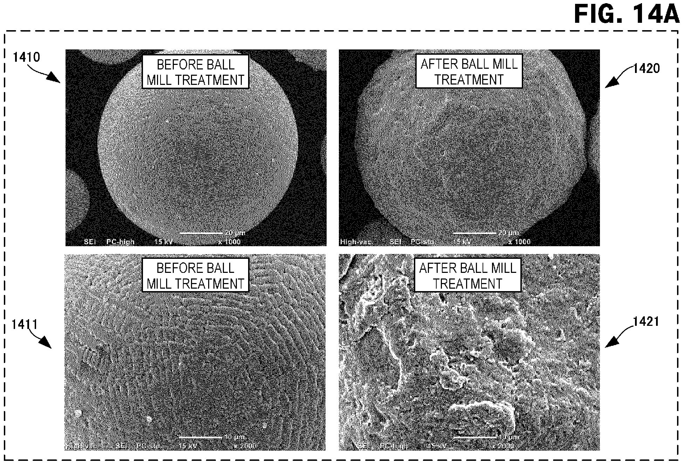

Fig. 14A is a view showing surface images (SEM) of the metal powder (Inconel 718/IN718) before and after the mechanical pretreatment according to this example.

Referring to Fig. 14A, the upper left view shows an SEM image 1410 before the ball mill treatment, and the upper right view shows an SEM image 1420 after the ball mill treatment. The lower left view shows a magnified SEM image 1411 before the ball mill treatment, and the lower right view shows a magnified SEM image 1421 after the ball mill treatment. As shown in the upper and lower right views, it is found that a solidification structure including a dendritic structure (dendrite crystal) is flattened by collision between powder particles in the mechanical pretreatment. Therefore, it can be predicted that the impedance of the metal powder having undergone the mechanical pretreatment using the ball mill becomes low.

### <<Electrical Characteristics of Surface of Metal Powder after Mechanical Pretreatment>>

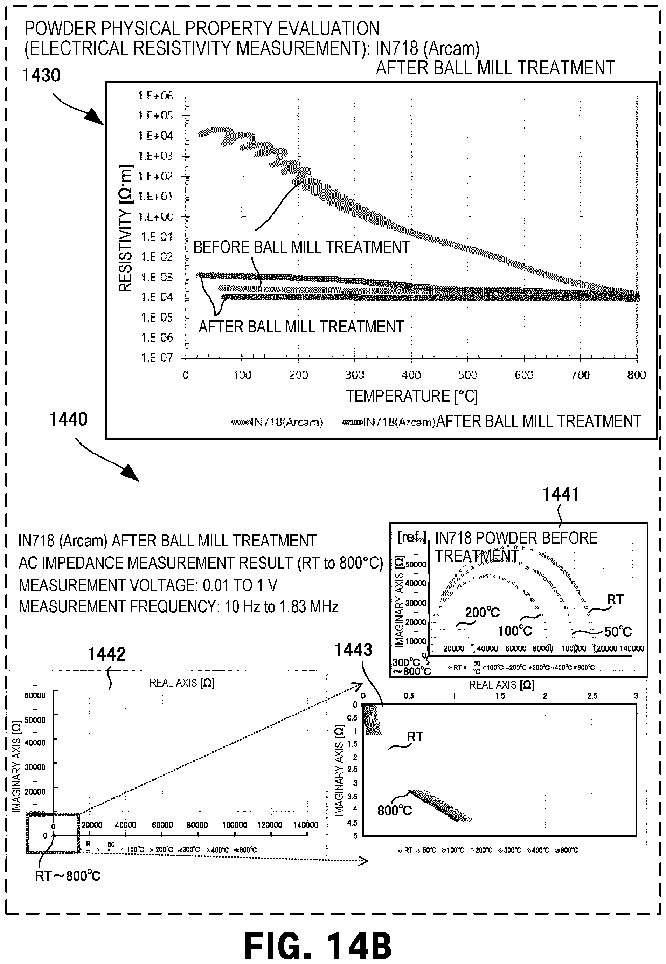

Fig. 14B is a view showing temperature changes in resistance value and impedance of the metal powder (Inconel 718/IN718) after the mechanical pretreatment according to this example. Note that measurement of the electrical characteristics of the surface of the metal powder was performed by apparatuses similar to those according to Example 1.

### (Resistance Value Measurement Result)

A graph 1430 shown in Fig. 14B shows a change in electrical resistance measured in accordance with Figs. 4B to 4E.

As is apparent from the graph 1430 of Fig. 14B, the resistivity of the metal powder (Inconel 718/IN718) after the ball mill treatment is consistently lower than the resistivity of the metal powder without the ball mill treatment from the time before heating at room temperature (RT) (the conductivity is higher). Therefore, even in a low-temperature region, the chargeability of the metal powder by irradiation with an electron beam decreases, thereby making it possible to decrease the preheating temperature.

### (Impedance Measurement Result)

A graph group 1440 shown in Fig. 14B shows changes in impedance of the metal powder (Inconel 718/IN718) before and after the ball mill treatment according to this example. An upper right graph 1441 of the graph group 1440 shows the impedance of the metal powder without the ball mill treatment, a left graph 1442 of the graph group 1440 shows the impedance of the metal powder after the ball mill treatment, and a lower right graph 1443 of the graph group 1440 is a magnified graph of the left graph 1442 near the origin.

As shown in the graph group 1440, it is found that the impedance of the metal powder after the ball mill treatment is extremely lower than the impedance of the metal powder without the ball mill treatment. Thus, the capacitance component is also small and approaches zero by low-temperature preheating.

### (Calculation Result of Capacitance Component)

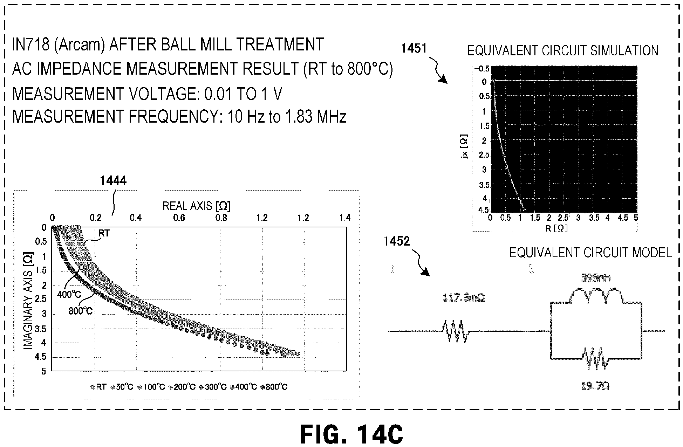

Fig. 14C is a view showing the capacitance component obtained based on the equivalent circuit model from the impedance measurement result after the ball mill treatment according to this example.

A graph 1444 shown in Fig. 14C is a graph obtained by enlarging the graph 1443 of Fig. 14B, an equivalent circuit simulation result 1451 is a simulation result obtained from the impedance measurement result of the graph 1444, and an equivalent circuit model 1452 is an equivalent circuit model of the metal powder (Inconel 718/IN718) after the ball mill treatment based on the equivalent circuit simulation result 1451. It is apparent from the equivalent circuit model 1452 of Fig. 14C that there is no capacitance component in the impedance measurement result.

Therefore, in accordance with the impedance measurement result, similar to the mechanical pretreatment using the jet mill, with the ball mill treatment, it is possible to provide a metal powder that generates no smoke phenomenon even when decreasing the preheating temperature.

### <<XPS Analysis Result of Metal Powder after Mechanical Pretreatment>>

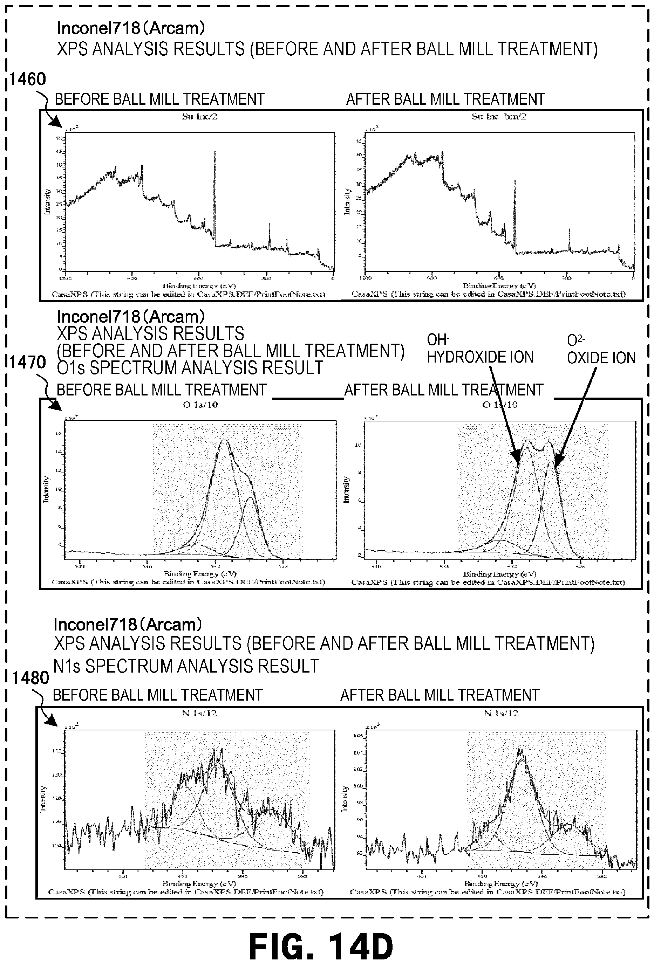

Fig. 14D is a view showing the XPS analysis result of the metal powder (Inconel 718/IN718) after the mechanical pretreatment according to this example. The XPS analysis result is used to verify a change in material of the metal powder (Inconel 718/IN718) by the ball mill treatment.

### (Component Analysis Result)

Referring to a component analysis result 1460 shown in Fig. 14D, there was no difference in peak position of XPS before and after the ball mill treatment, and no ball or container component was mixed.

### (O1s Spectrum Analysis Result)

Referring to an O1s spectrum analysis result 1470 shown in Fig. 14D, oxide ions (O²⁻) increased after the ball mill treatment.

### (N1s Spectrum Analysis Result)

Referring to an N1s spectrum analysis result 1480 shown in Fig. 14D, the nitride increased after the ball mill treatment.

### <Titanium 64/Ti64>

As Titanium 64, a product available from Daido Steel was used. Table 2 shows the characteristics of Titanium 64 used.

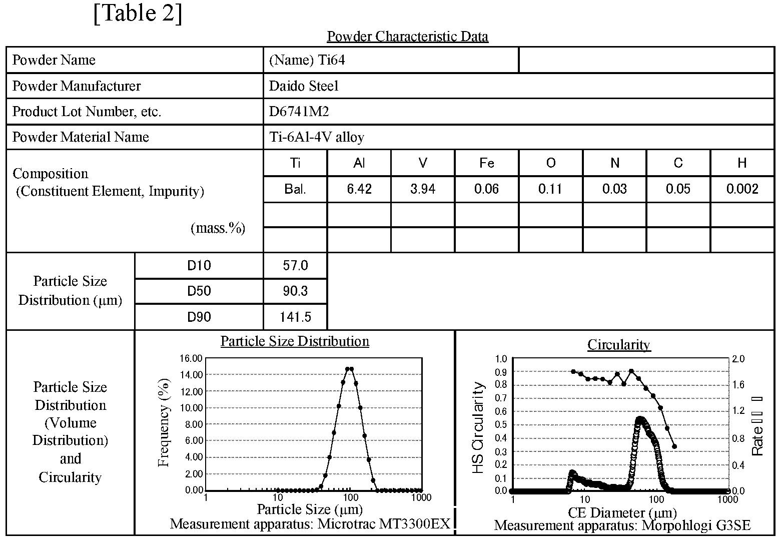

### <<Physical Characteristics of Surface of Metal Powder after Mechanical Pretreatment>>

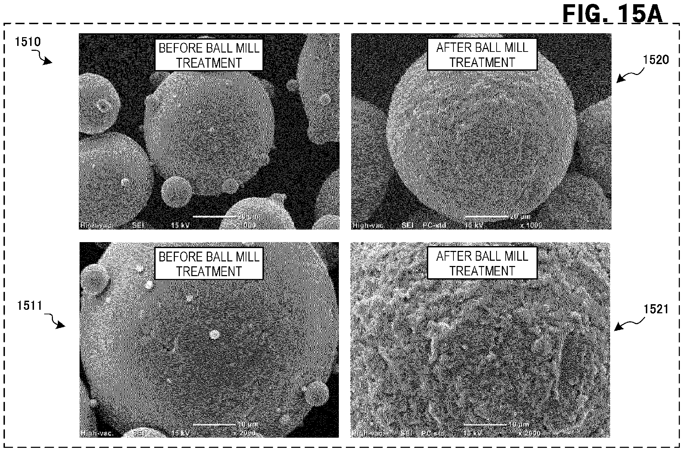

Fig. 15A is a view showing surface images (SEM) of the metal powder (Titanium 64/Ti64) before and after the mechanical pretreatment according to this example.

In Fig. 15A, the upper left view shows an SEM image 1510 before the ball mill treatment and the upper right view shows an SEM image 1520 after the ball mill treatment. The lower left view shows a magnified SEM image 1511 before the ball mill treatment and the lower right view shows a magnified SEM image 1521 after the ball mill treatment. As shown in the upper and lower right views, it is found that a solidification structure including a dendritic structure (dendrite crystal) is flattened by collision between powder particles in the mechanical pretreatment. Therefore, the impedance of the metal powder having undergone the mechanical pretreatment using the ball mill becomes low.

### <<Electrical Characteristics of Surface of Metal Powder after Mechanical Pretreatment>>

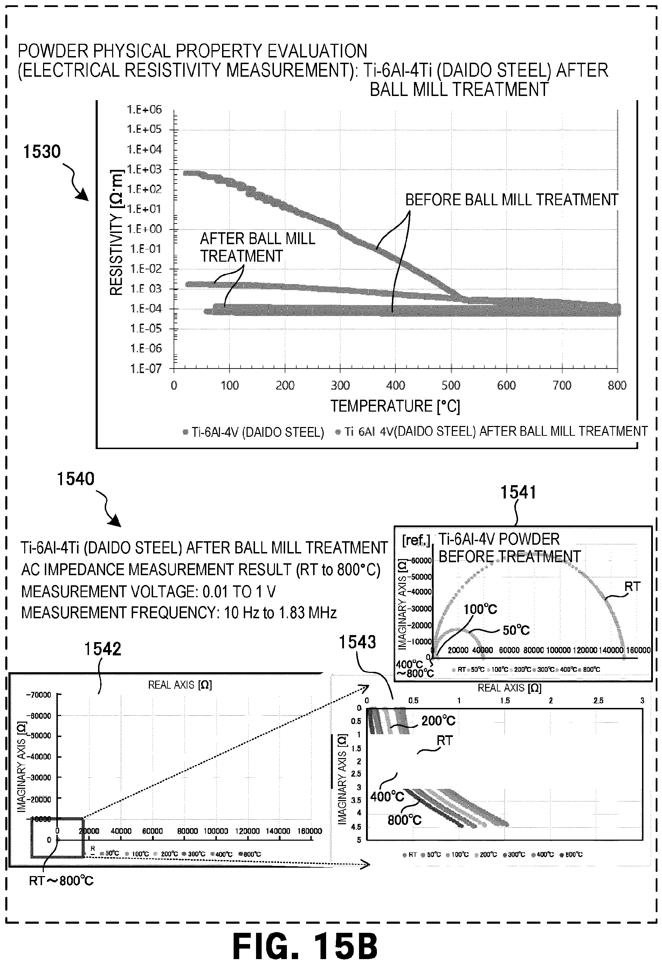

Fig. 15B is a view showing temperature changes in resistance value and impedance of the metal powder (Titanium 64/Ti64) after the mechanical pretreatment according to this example. Note that measurement of the electrical characteristics of the surface of the metal powder was performed by apparatuses similar to those according to Example 1.

### (Resistance Value Measurement Result)

A graph 1530 shown in Fig. 15B shows a change in electrical resistance measured in accordance with Figs. 4B to 4E.

As is apparent from the graph 1530 of Fig. 15B, the resistivity of the metal powder (Titanium 64/Ti64) after the ball mill treatment is consistently equal to or lower than the resistivity of the metal powder without the ball mill treatment from the time before heating at room temperature (RT) (the conductivity is higher). Therefore, even in a low-temperature region, the chargeability of the metal powder by irradiation with an electron beam decreases, thereby making it possible to decrease the preheating temperature.

### (Impedance Measurement Result)

A graph group 1540 shown in Fig. 15B shows changes in impedance of the metal powder (Titanium 64/Ti64) before and after the ball mill treatment according to this example. An upper right graph 1541 of the graph group 1540 shows the impedance of the metal powder without the ball mill treatment, a left graph 1542 of the graph group 1540 shows the impedance of the metal powder after the ball mill treatment, and a lower right graph 1543 of the graph group 1540 is a magnified graph of the left graph 1542 near the origin.

As shown in the graph group 1540, it is found that the impedance of the metal powder after the ball mill treatment is extremely lower than the impedance of the metal powder without the ball mill treatment. Thus, the capacitance component is also small and approaches zero by low-temperature preheating.

### <<XPS Analysis Result of Metal Powder after Mechanical Pretreatment>>

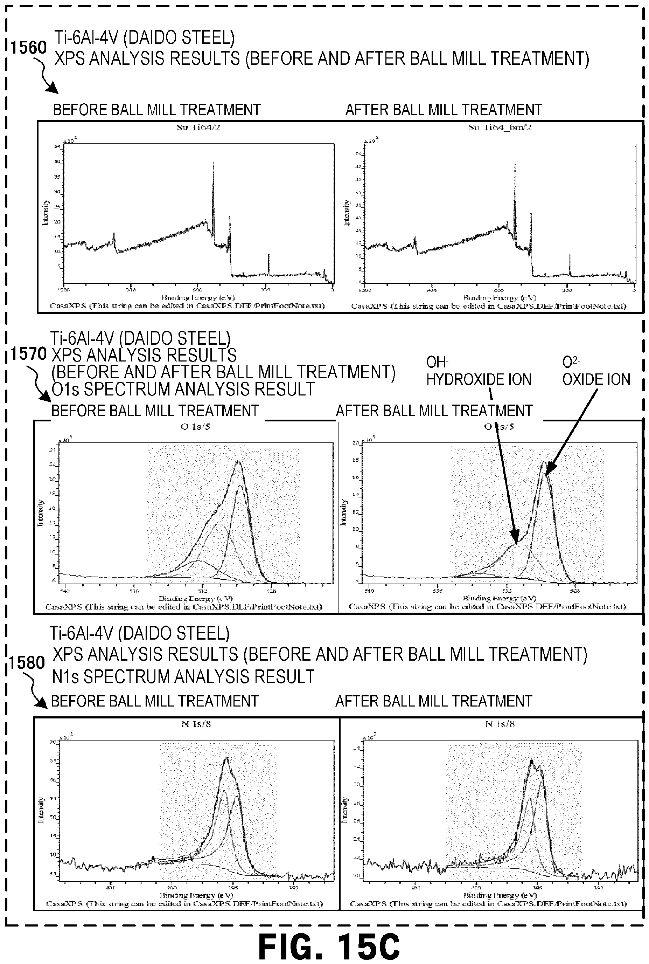

Fig. 15C is a view showing the XPS analysis result of the metal powder (Titanium 64/Ti64) after the mechanical pretreatment according to this example. The XPS analysis result is used to verify a change in material of the metal powder (Titanium 64/Ti64) by the ball mill treatment.

### (Component Analysis Result)

Referring to a component analysis result 1560 shown in Fig. 15C, there was no difference in peak position of XPS before and after the ball mill treatment, and no ball or container component was mixed.

### (O1s Spectrum Analysis Result)

Referring to an O1s spectrum analysis result 1570 shown in Fig. 15C, oxide ions (O²⁻) increased after the ball mill treatment.

### (N1s Spectrum Analysis Result)

Referring to an N1s spectrum analysis result 1580 shown in Fig. 15C, the nitride increased after the ball mill treatment.

### <TiAl>

As TiAl, a product available from Daido Steel was used. Table 3 shows the characteristics of TiAl used.

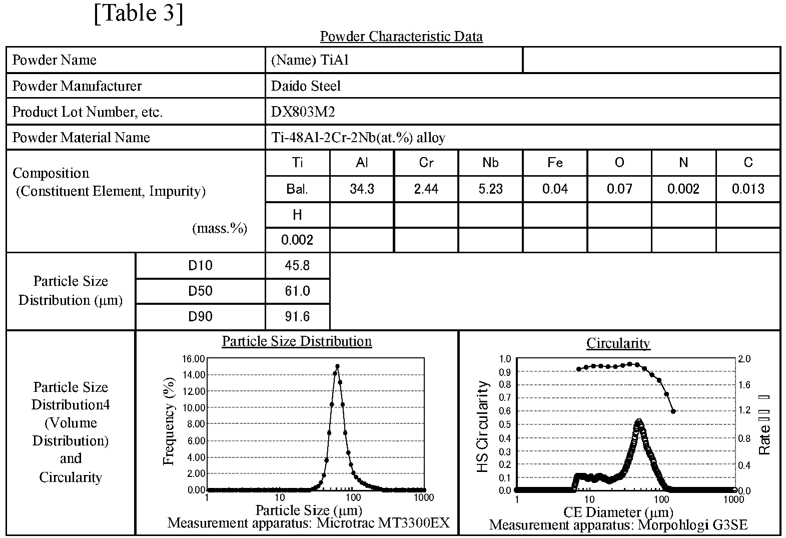

### <<Physical Characteristics of Surface of Metal Powder after Mechanical Pretreatment>>

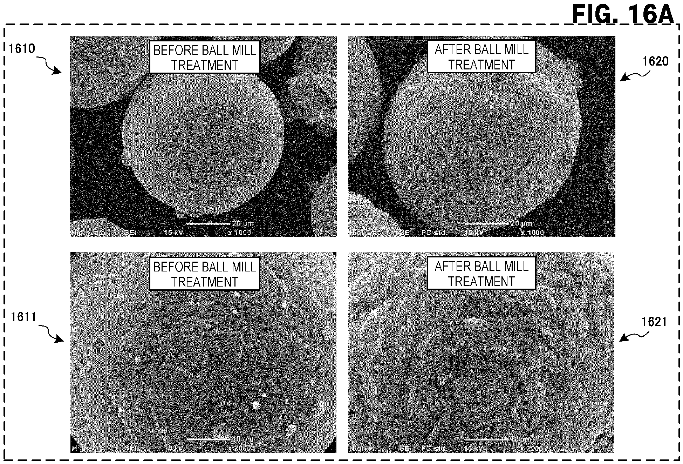

Fig. 16A is a view showing surface images (SEM) of the metal powder (titanium-aluminum alloy/TiAl) before and after the mechanical pretreatment according to this example.

In Fig. 16A, the upper left view shows an SEM image 1610 before the ball mill treatment and the upper right view shows an SEM image 1620 after the ball mill treatment. The lower left view shows a magnified SEM image 1611 before the ball mill treatment and the lower right view shows a magnified SEM image 1621 after the ball mill treatment. As shown in the upper and lower right views, it is found that a solidification structure including a dendritic structure (dendrite crystal) is flattened by collision between powder particles in the mechanical pretreatment. Therefore, the impedance of the metal powder having undergone the mechanical pretreatment using the ball mill becomes low.

### <<Electrical Characteristics of Surface of Metal Powder after Mechanical Pretreatment>>

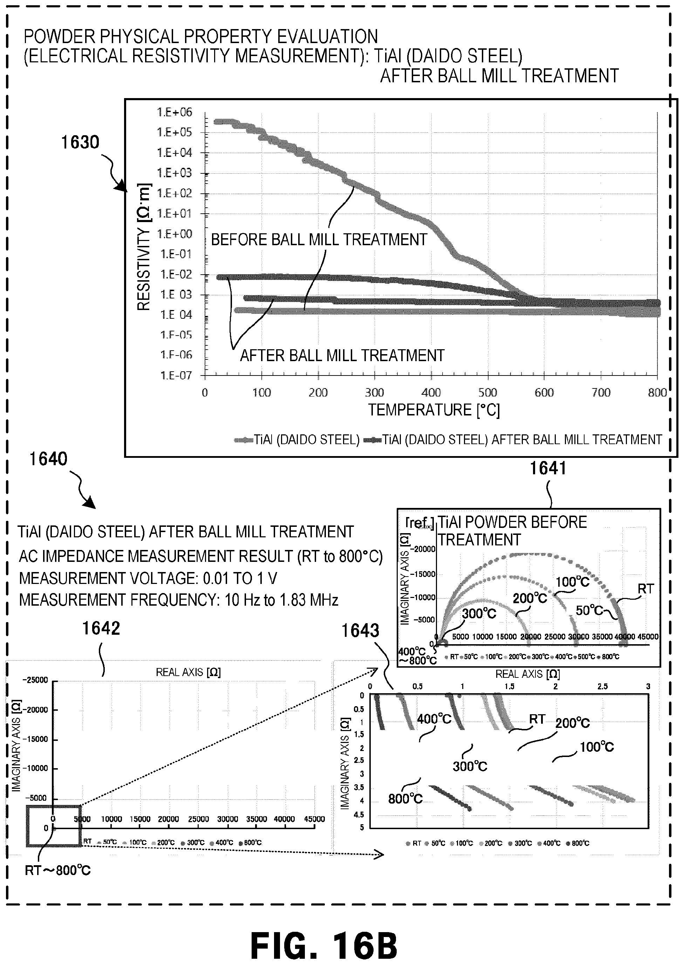

Fig. 16B is a view showing temperature changes in resistance value and impedance of the metal powder (titanium-aluminum alloy/TiAl) after the mechanical pretreatment according to this example. Note that measurement of the electrical characteristics of the surface of the metal powder was performed by apparatuses similar to those according to Example 1.

### (Resistance Value Measurement Result)

A graph 1630 shown in Fig. 16B shows a change in electrical resistance measured in accordance with Figs. 4B to 4E.

As is apparent from the graph 1630 of Fig. 16B, the resistivity of the metal powder (titanium-aluminum alloy/TiAl) after the ball mill treatment is consistently equal to or lower than the resistivity of the metal powder without the ball mill treatment from the time before heating at room temperature (RT) (the conductivity is higher). Therefore, even in a low-temperature region, the chargeability of the metal powder by irradiation with an electron beam decreases, thereby making it possible to decrease the preheating temperature.

### (Impedance Measurement Result)

A graph group 1640 shown in Fig. 16B shows changes in impedance of the metal powder (titanium-aluminum alloy/TiAl) before and after the ball mill treatment according to this example. An upper right graph 1641 of the graph group 1640 shows the impedance of the metal powder without the ball mill treatment, a left graph 1642 of the graph group 1640 shows the impedance of the metal powder after the ball mill treatment, and a lower right graph 1643 of the graph group 1640 is a magnified graph of the left graph 1642 near the origin.

As shown in the graph group 1640, it is found that the impedance of the metal powder after the ball mill treatment is extremely lower than the impedance of the metal powder without the ball mill treatment. Thus, the capacitance component is also small and approaches zero by low-temperature preheating.

### <<XPS Analysis Result of Metal Powder after Mechanical Pretreatment>>

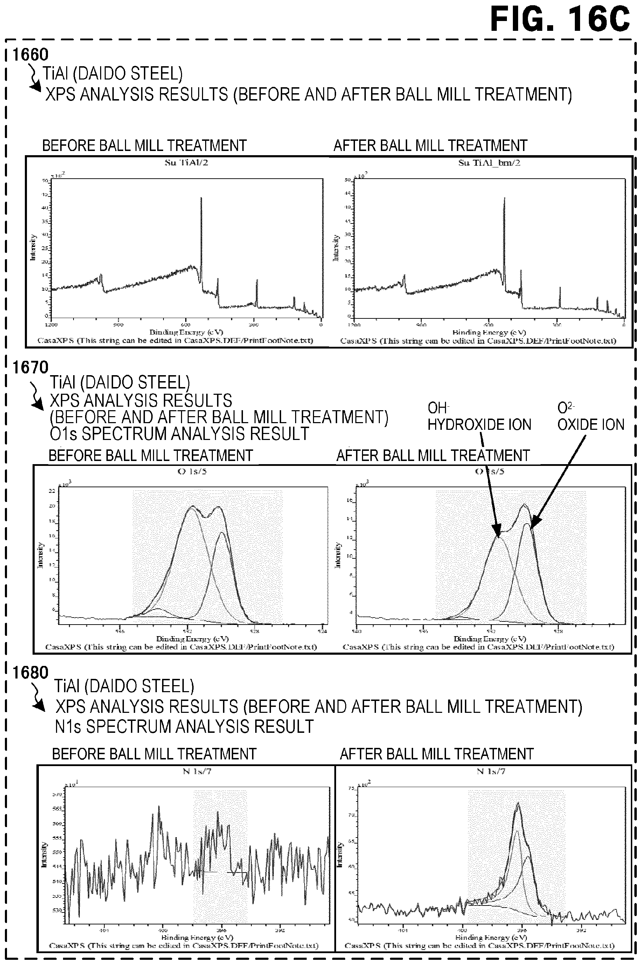

Fig. 16C is a view showing the XPS analysis result of the metal powder (titanium-aluminum alloy/TiAl) after the mechanical pretreatment according to this example.

### (Component Analysis Result)

Referring to a component analysis result 1660 shown in Fig. 16C, there was no difference in peak position of XPS before and after the ball mill treatment, and no ball or container component was mixed.

### (O1s Spectrum Analysis Result)

Referring to an O1s spectrum analysis result 1670 shown in Fig. 16C, oxide ions (O²⁻) increased after the ball mill treatment.

### (N1s Spectrum Analysis Result)

Referring to an N1s spectrum analysis result 1680 shown in Fig. 16C, the nitride increased after the ball mill treatment.

### <Cu>

As a Cu powder, a product available from Fukuda Metal Foil & Powder was used. Table 4 shows the characteristics of the Cu powder used.

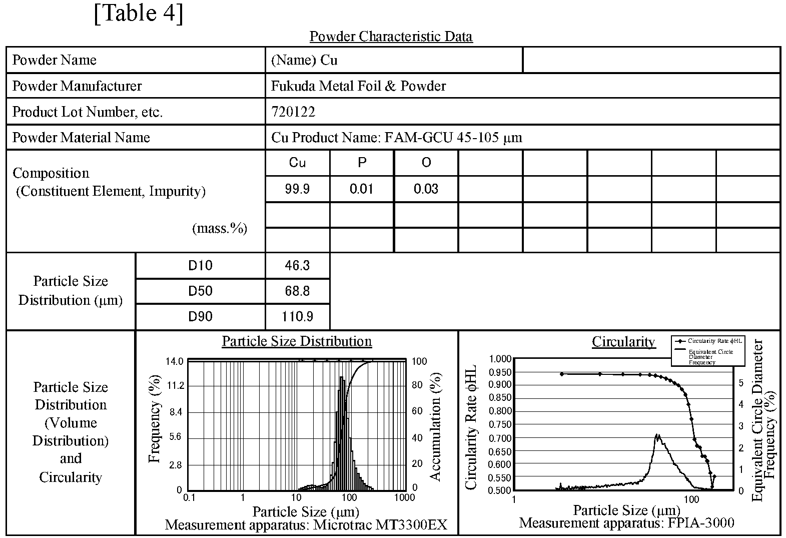

### <<Physical Characteristics of Surface of Metal Powder after Mechanical Pretreatment>>

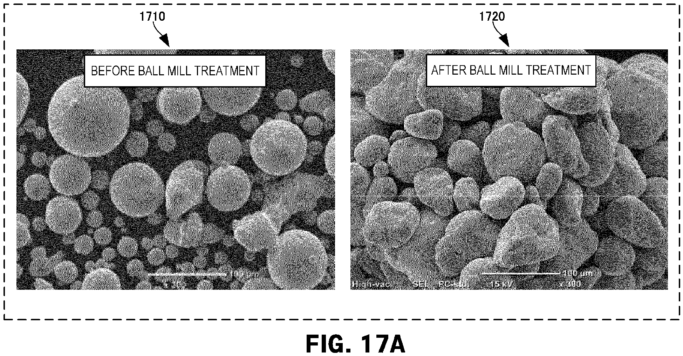

Fig. 17A is a view showing surface images (SEM) of the metal powder (copper powder/Cu) before and after the mechanical pretreatment according to this example.

In Fig. 17A, the left view shows an SEM image 1710 before the ball mill treatment and the right view shows an SEM image 1720 after the ball mill treatment. As shown in the right view, it is found that a solidification structure including a dendritic structure (dendrite crystal) is flattened by collision between powder particles in the mechanical pretreatment. Therefore, the impedance of the metal powder having undergone the mechanical pretreatment using the ball mill becomes low.

### <<Electrical Characteristics of Surface of Metal Powder after Mechanical Pretreatment>>

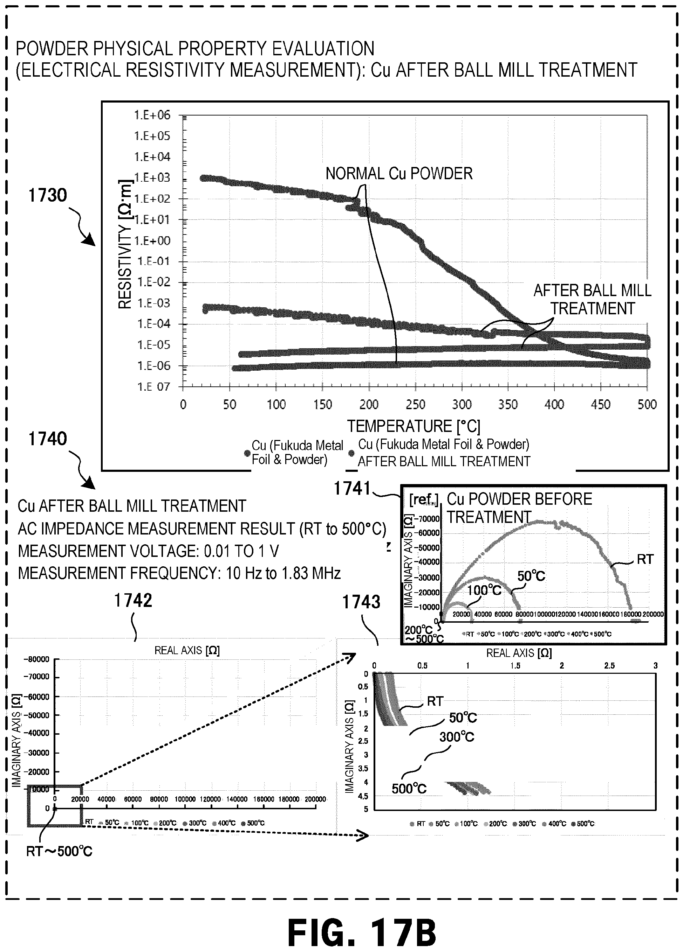

Fig. 17B is a view showing temperature changes in resistance value and impedance of the metal powder (titanium-aluminum alloy/TiAl) after the mechanical pretreatment according to this example. Note that measurement of the electrical characteristics of the surface of the metal powder was performed by apparatuses similar to those according to Example 1.

### (Resistance Value Measurement Result)

A graph 1730 shown in Fig. 17B shows a change in electrical resistance measured in accordance with Figs. 4B to 4E.

As is apparent from the graph 1730 of Fig. 17B, the resistivity of the metal powder (copper powder/Cu) after the ball mill treatment is consistently equal to or lower than the resistivity of the metal powder without the ball mill treatment from the time before heating at room temperature (RT) (the conductivity is higher). Therefore, even in a low-temperature region, the chargeability of the metal powder by irradiation with an electron beam decreases, thereby making it possible to decrease the preheating temperature.

### (Impedance Measurement Result)

A graph group 1740 shown in Fig. 17B shows changes in impedance of the metal powder (copper powder/Cu) before and after the ball mill treatment according to this example. An upper right graph 1741 of the graph group 1740 shows the impedance of the metal powder without the ball mill treatment, a left graph 1742 of the graph group 1740 shows the impedance of the metal powder after the ball mill treatment, and a lower right graph 1743 of the graph group 1740 is a magnified graph of the left graph 1742 near the origin.

As shown in the graph group 1740, it is found that the impedance of the metal powder after the ball mill treatment is extremely lower than the impedance of the metal powder without the ball mill treatment. Thus, the capacitance component is also small and approaches zero by low-temperature preheating.

### <Another Metal Powder>

As another metal powder, an iron (Fe) powder or tungsten (W) powder was used to perform the mechanical pretreatment, thereby measuring temperature changes in resistance value and impedance. In either case, in the temperature changes in resistance value and impedance, similar improvement tendency was found. Table 5 shows the characteristics of the tungsten (W) powder used.

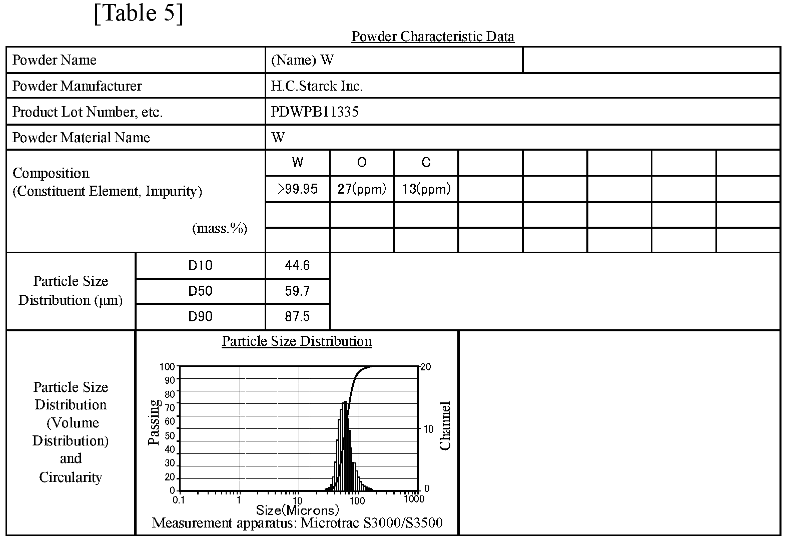

### [Example 4]

### <<Mechanical Pretreatment>>

As the mechanical pretreatment of an alloy powder, mechanical pretreatment using a ball mill was executed. In Example 4, the mechanical pretreatment was executed by changing the treatment time by the ball mill using nickel alloy Inconel 718. As Inconel 718, a product available from Arcam was used. Table 1 shows the characteristics of the product.

### (Operation Conditions of Different Times)

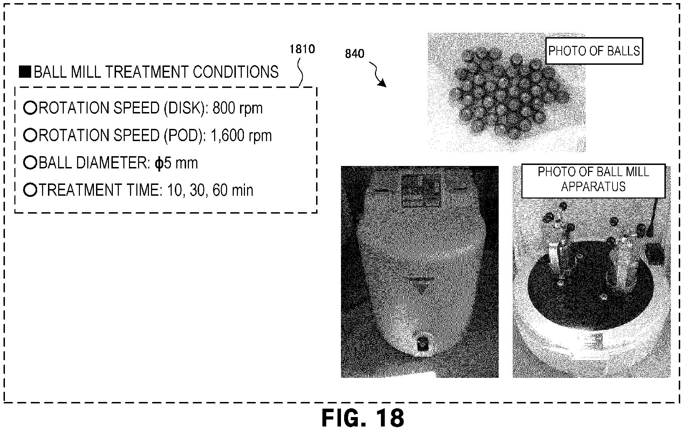

Fig. 18 is a view showing a ball mill 840 that has performed the mechanical pretreatment and operation conditions 1810 of different times according to this example. Note that the conditions other than the treatment time are the same as in Example 3.

### <<Physical Characteristics of Surface of Metal Powder after Mechanical Pretreatment>>

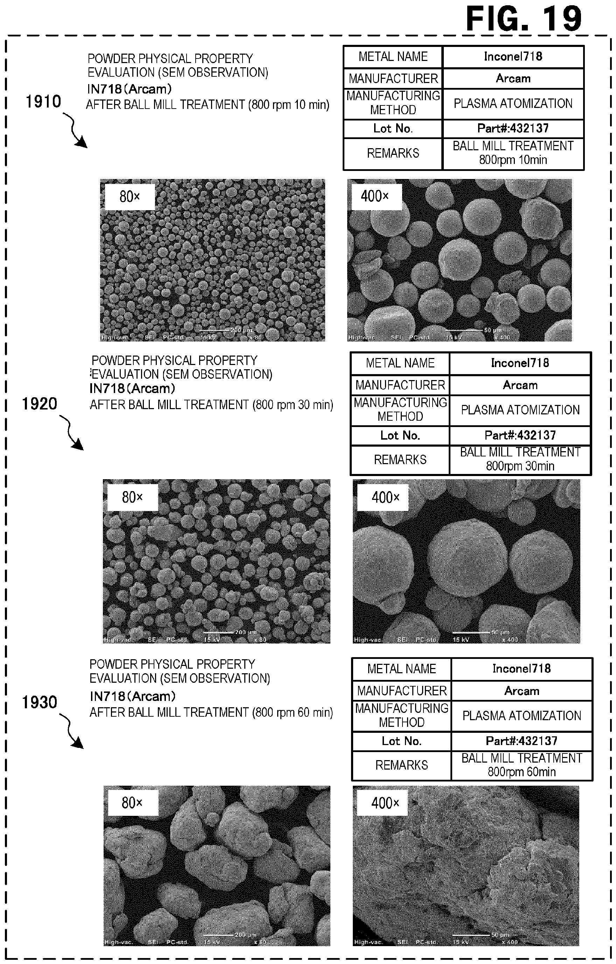

Fig. 19 is a view showing surface images (SEM) of the metal powder (Inconel 718/IN718) after the mechanical pretreatment for the different times according to this example. Fig. 19 shows an SEM image 1910 after treatment for 10 min, an SEM image 1920 after treatment for 30 min, and an SEM image 1930 after treatment for 60 min.

As shown in Fig. 19, in the SEM images 1910 and 1920, it is found that a solidification structure including a dendritic structure (dendrite crystal) is flattened by collision between powder particles in the mechanical pretreatment. Therefore, it can be predicted that the impedance of the metal powder having undergone the mechanical pretreatment using the ball mill becomes low. However, in the SEM image 1930, it is found that the metal powder (Inconel 718/IN718) is collapsed and aggregated.

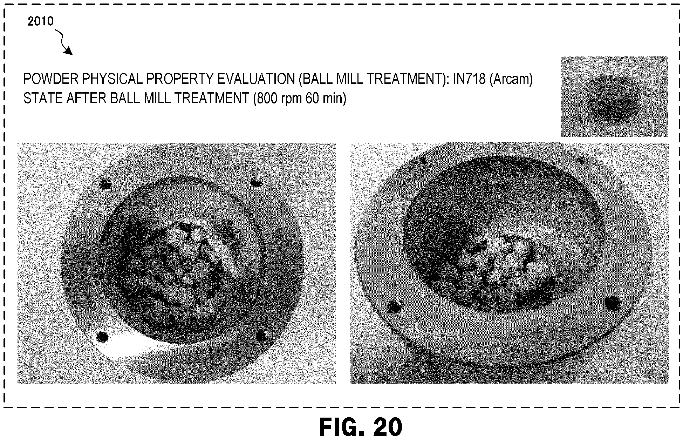

Fig. 20 is a view showing a state 2010 of the metal powder (Inconel 718/IN718) after the mechanical pretreatment for a time exceeding an appropriate time according to this example. That is, Fig. 20 shows the state 2010 of the metal powder (Inconel 718/IN718) after treatment for 60 min using the ball mill 840, and shows a state in which if ball mill treatment is performed by setting the treatment time to 60 min at 800 rpm, the powder is unwantedly alloyed with crushing balls and a mill container. Therefore, the ball mill treatment under the conditions is performed preferably for a period less than 60 min, and more preferably for about 30 min.

### <<Electrical Characteristics of Surface of Metal Powder after Mechanical Pretreatment>>

### (Resistance Value Measurement Result)

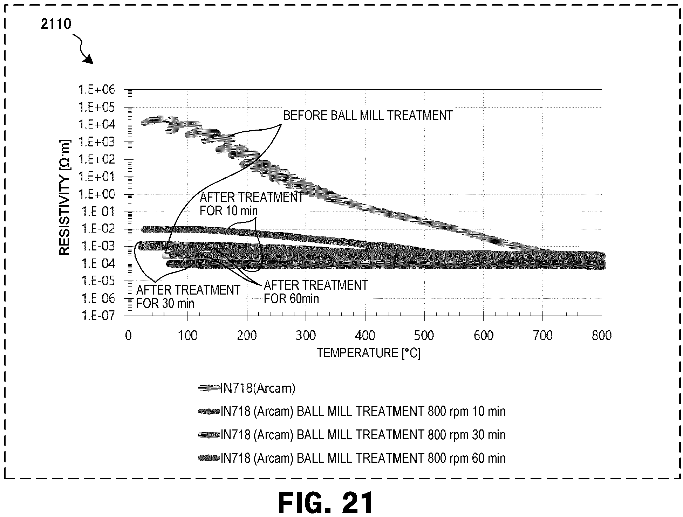

Fig. 21 is a graph showing temperature changes in resistance value of the metal powder (Inconel 718/IN718) after the mechanical pretreatment for the different times according to this example. Fig. 21 is a graph showing changes in electrical resistance measured in accordance with Figs. 4B to 4E after the mechanical pretreatment for the different times.

As is apparent from Fig. 21, even after the ball mill treatment for 10 min or 30 min, the resistivity of the metal powder (Inconel 718/IN718) after the ball mill treatment is consistently equal to or lower than the resistivity of the metal powder without the ball mill treatment from the time before heating at room temperature (RT) (the conductivity is higher). Therefore, it is considered that even in a low-temperature region, the chargeability of the metal powder by irradiation with an electron beam decreases, thereby making it possible to decrease the preheating temperature. However, after the treatment for 60 min, the effect of the decrease of the resistivity by preheating is small.

### (Impedance Measurement Result)

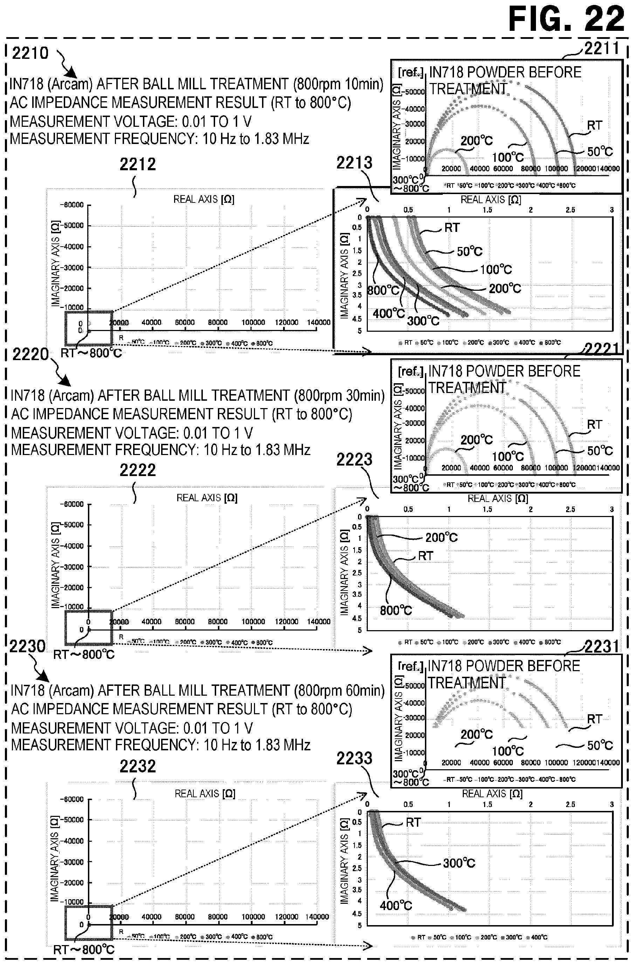

Fig. 22 is a view showing temperature changes in impedance of the metal powder (Inconel 718/IN718) after the mechanical pretreatment for the different times according to this example. Fig. 22 shows an impedance measurement result 2210 after the treatment for 10 min, an impedance measurement result 2220 after the treatment for 30 min, and an impedance measurement result 2230 after the treatment for 60 min.

In the impedance measurement result 2210, an upper right view 2211 shows the impedance of the metal powder without the ball mill treatment, a left graph 2212 shows the impedance of the metal powder after the ball mill treatment, and a lower right graph 2213 is a magnified graph of the left graph 2212 near the origin. In the impedance measurement result 2220, an upper right graph 2221 shows the impedance of the metal powder without the ball mill treatment, a left graph 2222 shows the impedance of the metal powder after the ball mill treatment, and a lower right graph 2223 is a magnified graph of the left graph 2222 near the origin. Furthermore, in the impedance measurement result 2230, an upper right graph 2231 shows the impedance of the metal powder without the ball mill treatment, a left graph 2232 shows the impedance of the metal powder after the ball mill treatment, and a lower right graph 2233 is a magnified graph of the left graph 2232 near the origin.

As shown in either of the impedance measurement results 2210 to 2230, it is found that the impedance of the metal powder after the ball mill treatment is extremely lower than the impedance of the metal powder without the ball mill treatment. Thus, the capacitance component is also small and approaches zero by low-temperature preheating.

### <<Consideration of Treatment Time by Ball Mill>>

In this example, if comprehensive determination is performed from the SEM image of the surface, the state of the powder after the ball mill treatment, the resistance value measurement result, and the impedance measurement result, the ball mill treatment under the conditions is performed preferably for a period from 10 min (inclusive) to 60 min (exclusive), and more preferably for about 30 min. Note that a preferable time period is changed depending on the operation conditions such as a ball size, rotation speed, and temperature.

### <<Smoke Test Using Metal Powder after Mechanical Pretreatment>>

### (Smoke Test Result)

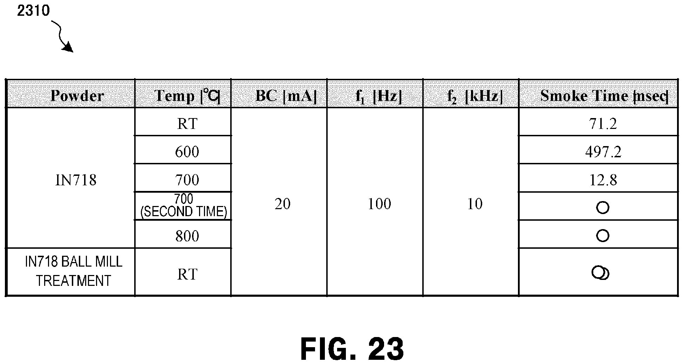

Fig. 23 is a table showing a result 2310 of a smoke test using the metal powder after the mechanical pretreatment according to Examples 3 and 4.

As shown in Fig. 23, before the mechanical pretreatment using the ball mill treatment according to Examples 3 and 4, it was impossible to suppress the smoke phenomenon without preheating at 700°C or higher but after the mechanical pretreatment by the ball mill treatment according to Examples 3 and 4, no smoke phenomenon was generated even at room temperature (RT). Therefore, depending on the conditions of a melting beam, a result that no smoke was generated even at room temperature without preheating was obtained. However, when assuming the strictest conditions among the melting conditions, it is desirable to execute preheating to 600°C to 500°C under the current melting conditions. The smoke test in which this result was obtained will be described below.

### (Smoke Text Method and Conditions)

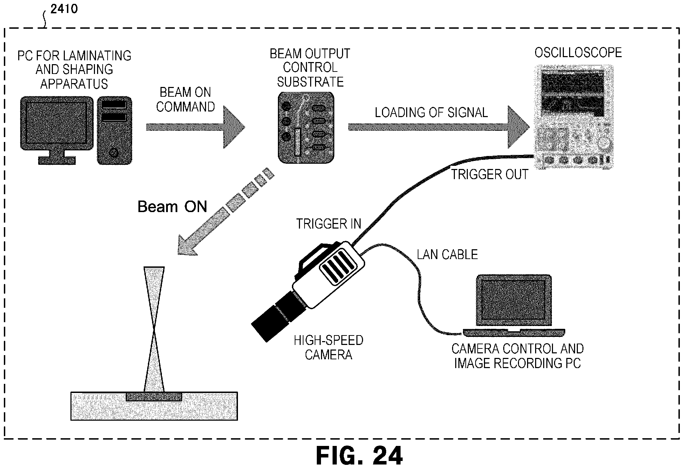

Fig. 24 is a view for explaining a smoke test method using the metal powder after the mechanical pretreatment according to Examples 3 and 4.

A smoke test system 2410 shown in Fig. 24 includes a beam irradiation controller that controls irradiation, with a beam, of a laminating and shaping metal powder as a smoke test target, and a metal powder observer that observes the state of the laminating and shaping metal powder irradiated with the beam. The beam irradiation controller includes a shaping device (PC) that generates shaping data, a beam output control substrate that controls output of the beam in correspondence with a beam ON command from the shaping device, and a beam output unit that outputs the beam by a beam output signal from the beam output control substrate. Furthermore, the metal powder observer includes a high-speed camera that captures the laminating and shaping metal powder during a smoke test, an oscilloscope that controls a timing of image capturing by the high-speed camera in synchronism with the control signal from the beam output control substrate, and a camera control/storage device (PC) that controls the high-speed camera to acquire the captured image, and stores it. Note that the smoke test system shown in Fig. 24 is merely an example, and is not limited to this.

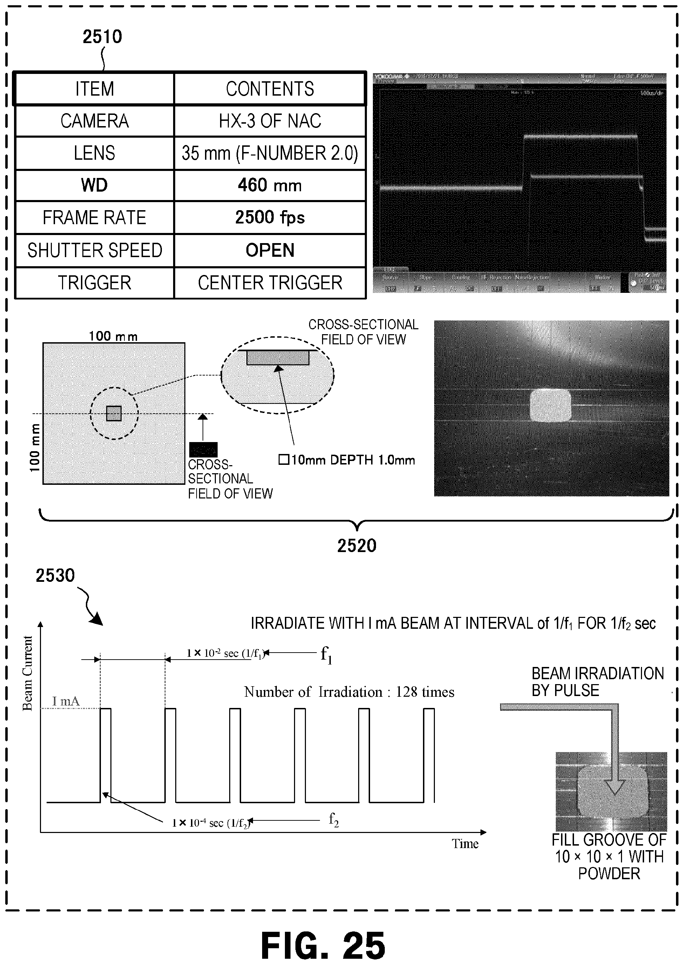

Fig. 25 is a view showing smoke test conditions using the metal powder after the mechanical pretreatment according to Examples 3 and 4. That is, the smoke test conditions include the operation conditions in the smoke test system 2410 shown in Fig. 24.

Fig. 25 shows camera conditions 2510 of the high-speed camera, a structure 2520 of an arrangement portion in which the laminating and shaping metal powder as the smoke test target is arranged, and a beam ON signal 2530 from the beam output control substrate.

### <<Effect of This Example>>

According to this example, with simple mechanical treatment, it is possible to provide a metal powder that generates no smoke phenomenon even when decreasing the preheating temperature.

For example, by performing mechanical preheating using the jet mill, the electrical resistance and impedance are decreased, and the temperature at which the capacitance component approaches zero is decreased. Thus, a metal powder that generates no smoke phenomenon even when decreasing the preheating temperature is provided. By performing mechanical preheating using the ball mill, the electrical resistance and impedance are decreased, and the temperature at which the capacitance component approaches zero is decreased. Thus, a metal powder that generates no smoke phenomenon even when decreasing the preheating temperature is provided.

Note that this example has explained the mechanical pretreatment using the jet mill and that using the ball mill. However, the present invention is not limited to the jet mill and the ball mill, and any mechanical treatment that can decrease the impedance, particularly the capacitance component by making metal particles collide with each other can be performed to obtain the same effect.

[Another Example Embodiment of Metal Powder for laminating and shaping]

In the above-described examples, as an alloy powder, nickel-based alloy Inconel 718 (registered trademark: Inconel 718/UNS Number N07718), titanium 64 or TiAl of a titanium-based alloy, or the like was used. However, the alloy powder is not limited to them.

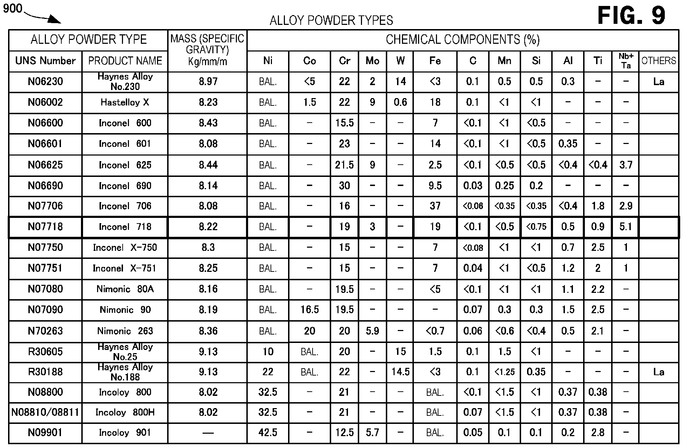

Fig. 9 shows examples 900 of other alloy powders to which the present invention is applicable. The examples of other alloy powders include other nickel-based alloys, and other metal-based alloys containing nickel at predetermined ratios such as a cobalt-based alloy, an iron-based alloy, a copper alloy, and a tungsten alloy.

### [Example Embodiment of Metal Laminating and Shaping Apparatus]

A metal laminating and shaping apparatus according to the example embodiment of the present invention will be described. The metal laminating and shaping apparatus according to this example embodiment has a function of performing mechanical pretreatment according to this example embodiment.

### <<Arrangement of Metal Laminating and Shaping Apparatus>>

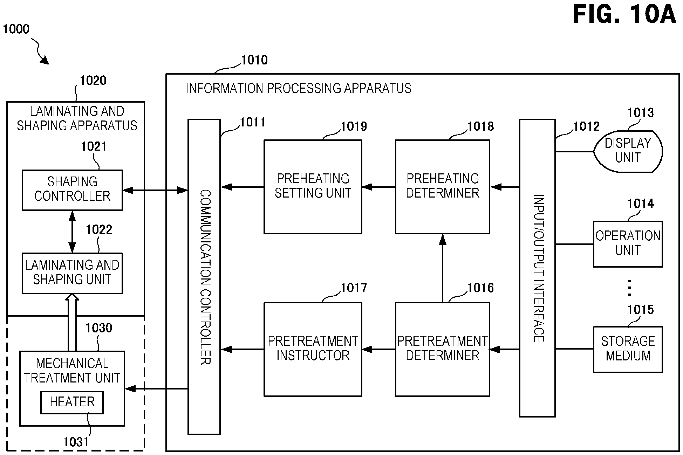

Fig. 10A is a block diagram showing the arrangement of a metal laminating and shaping apparatus 1000 according to this example embodiment.

The metal laminating and shaping apparatus 1000 includes an information processing apparatus 1010, a laminating and shaping apparatus 1020, and a mechanical treatment unit 1030. Note that the mechanical treatment unit 1030 may be included in the laminating and shaping apparatus 1020. The mechanical treatment unit 1030 includes a heater 1031.

The information processing apparatus 1010 includes a communication controller 1011, an input/output interface 1012, a display unit 1013, an operation unit 1014, and a storage medium 1015. The information processing apparatus 1010 also includes a pretreatment determiner 1016, a pretreatment instructor 1017, a preheating determiner 1018, and a preheating setting unit 1019.

The communication controller 1011 controls communication with a shaping controller 1021 of the laminating and shaping apparatus 1020 and the mechanical treatment unit 1030. The input/output interface 1012 interface inputs/outputs with the display unit 1013, the operation unit 1014, and the storage medium 1015. Note that the display unit 1013 and the operation unit 1014 may be integrated as a touch panel. The pretreatment determiner 1016 determines, based on metal powder characteristic information input from the scanner 1014, whether mechanical pretreatment by the mechanical treatment unit 1030 is necessary. If the mechanical pretreatment is necessary, the pretreatment instructor 1017 instructs execution of the mechanical pretreatment by the mechanical treatment unit 1030. If the metal laminating and shaping apparatus 1000 can adjust the preheating temperature, the preheating determiner 1018 determines, based on the metal powder characteristic information input from the scanner 1014 and execution information of the mechanical pretreatment from the pretreatment determiner 1016, whether to adjust the preheating temperature. If it is determined to adjust the preheating temperature, the preheating setting unit 1019 instructs the shaping controller 1021 of the laminating and shaping apparatus 1020 to adjust the preheating temperature.

The laminating and shaping apparatus 1020 includes the shaping controller 1021 and a laminating and shaping unit 1022. The shaping controller 1021 controls the operations of the components of the laminating and shaping unit 1022 in accordance with a laminating and shaping instruction including laminating and shaping data from the information processing apparatus 1010. Under the sequence control of the shaping controller 1021, the laminating and shaping unit 1022 implements shaping of a laminating and shaping object by repeating supply of a metal powder, generation of a powder bed, irradiation with an electron beam, and control of a shaping platform.

The mechanical treatment unit 1030 may be, for example, the jet mill or the ball mill used in the above-described examples. The mechanical treatment unit 1030 is connected to the hopper of the laminating and shaping unit 1022.

### (Laminating and Shaping Device Including Mechanical Treatment Unit)

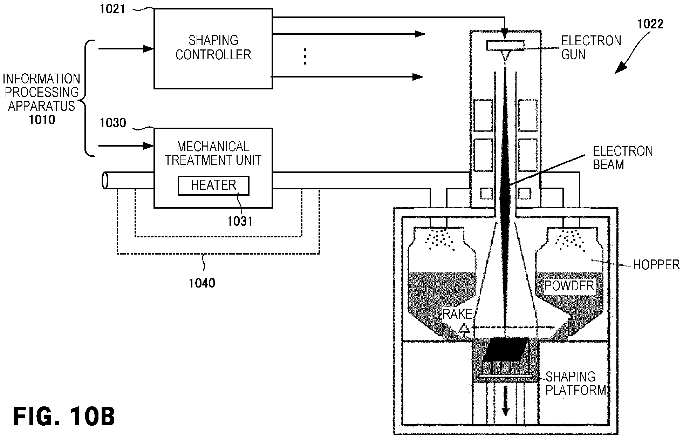

Fig. 10B is a block diagram showing the arrangement of the laminating and shaping apparatus 1020 including the mechanical treatment unit 1030 according to this example embodiment. Note that the same reference numerals as in Fig. 10A denote similar components and a repetitive description thereof will be omitted.

Referring to Fig. 10B, if the mechanical pretreatment by the mechanical treatment unit 1030 is unnecessary, the metal powder providing path 1010 indicates a supply path through which the provided metal powder is sent to the hopper of the laminating and shaping unit 1022 without performing the mechanical treatment.

### (Example of Display of Information Processing Device)

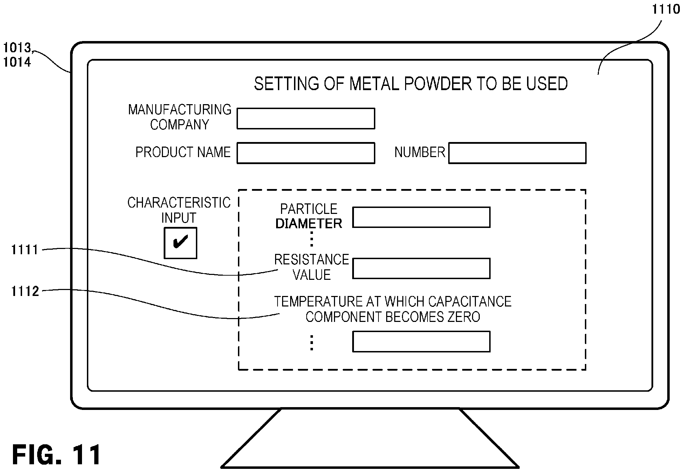

Fig. 11 is a view showing an example of display of the information processing apparatus 1010 of the metal laminating and shaping apparatus 1000 according to this example embodiment. The display example shown in Fig. 11 is implemented by the display unit 1013 and the operation unit 1014 in Fig. 10A.

An operator who instructs the metal laminating and shaping apparatus 1000 to perform metal laminating and shaping sets, from a display screen 1100, the characteristics of a metal powder to be used. The manufacturing company and product name of the metal powder are input to the display screen 1100. If the manufacturing company and product name of the metal powder are known and the characteristics are registered already, the characteristics can be read out.

The operator can set input of characteristics which have not been registered. When inputting the characteristics, the electrical resistance value measured in accordance with the example and the temperature at which the capacitance component calculated from the impedance approaches zero can be input together with a particle diameter and the like. Based on the electrical resistance value and the temperature at which the capacitance component approaches zero, the information processing apparatus 1010 determines whether to execute the mechanical pretreatment on the metal powder. Alternatively, if the preheating temperature can be adjusted, the preheating temperature is adjusted in correspondence with the characteristics of the metal powder and/or the melting temperature at the time of laminating and shaping.

Note that by inputting the metal powder characteristic information from the storage medium 1015 or the communication controller 1011, it is possible to load a larger amount of data instantaneously.

### <<Processing Procedure of Information Processing Device>>

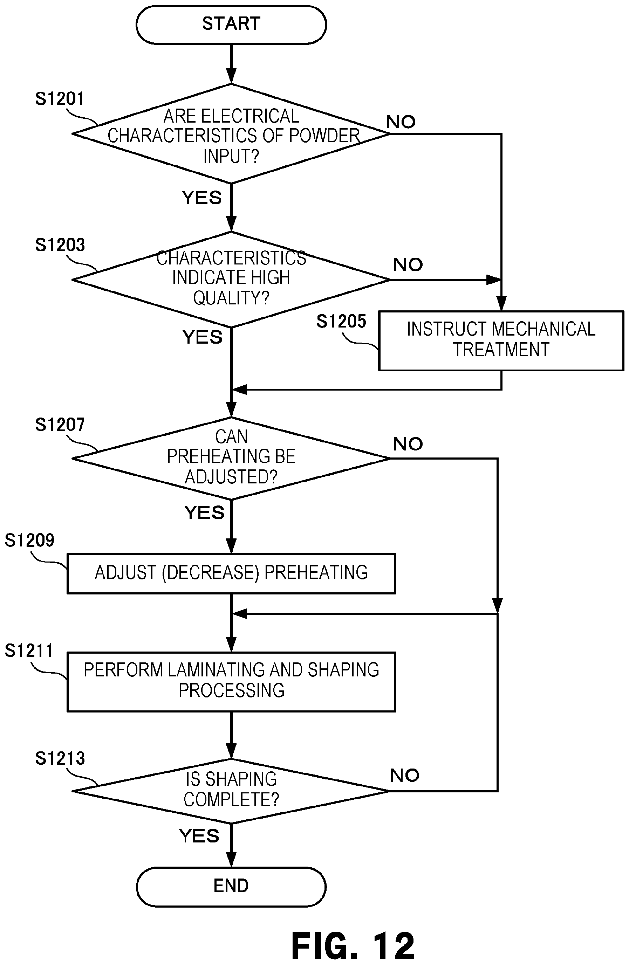

Fig. 12 is a flowchart illustrating the processing procedure of the information processing apparatus 1010 of the metal laminating and shaping apparatus 1000 according to this example embodiment. This flowchart is executed using the RAM by the CPU that controls the information processing apparatus 1010, thereby implementing the functional components of the information processing apparatus 1010 shown in Fig. 10A.

In step S1201, the information processing apparatus 1010 determines whether the electrical characteristics of the metal powder are input. If it is determined that the electrical characteristics of the metal powder are input, the information processing apparatus 1010 determines, in step S1203, based on the electrical characteristics of the metal powder, whether the metal powder is a high-quality metal powder that generates no smoke phenomenon even when decreasing the preheating temperature. If it is not determined that the metal powder is a high-quality metal powder or it is determined that the electrical characteristics of the metal powder are not input, the information processing apparatus 1010 instructs, in step S1205, to execute the mechanical pretreatment.

On the other hand, if it is determined that the metal powder is a high-quality metal powder or the mechanical pretreatment is performed, the information processing apparatus 1010 determines in step S1207 whether the metal laminating and shaping apparatus 1000 can adjust the preheating. If it is determined that the preheating can be adjusted, the information processing apparatus 1010 adjusts the preheating in step S1209. Particularly, the preheating temperature is decreased to a temperature to which the temperature can be decreased in laminating and shaping. Then, in step S1211, the information processing apparatus 1010 executes laminating and shaping processing by the adjusted preheating. If it is determined that the preheating cannot be adjusted, the information processing apparatus 1010 executes, in step S1211, the laminating and shaping processing by preset preheating.

In step S1213, the information processing apparatus 1010 waits for completion of the laminating and shaping processing, and repeats the laminating and shape processing in step S1211.

The metal laminating and shaping apparatus according to this example embodiment can implement efficient metal laminating and shaping by improving a metal powder to be used to a metal powder for which the preheating temperature is low. That is, the total laminating shaping time is shortened by decreasing the preheating temperature, thereby improving the productivity. In addition to this, when the preheating temperature is decreased, the removal of an unnecessary power after laminating and shaping becomes easy.

### [Other Example Embodiments]

Note that the metal laminating and shaping apparatus according to the example embodiment determines, based on the characteristics of the metal powder, whether to perform the mechanical pretreatment. For the sake of simplicity of treatment, all metal powders may undergo the mechanical pretreatment.

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

## Claims

1. A metal powder to be used for laminating and shaping a metal object, wherein a solidification structure including a dendritic structure on a surface of the metal powder has been flattened.

2. The metal powder according to claim 1, wherein the solidification structure including the dendritic structure has been flattened by mechanical treatment including collision treatment of the metal powder.

3. The metal powder according to claim 2, wherein the mechanical treatment is performed while heating the metal powder to a temperature of 100°C to 300°C.

4. The metal powder according to claim 3, wherein the mechanical treatment is performed within an appropriate time range.

5. The metal powder according to any one of claims 1 to 4, wherein a capacitance component of an impedance measured for the metal powder becomes zero.

6. The metal powder according to claim 5, wherein the capacitance component of the impedance measured for the metal powder heated to a predetermined temperature becomes zero.

7. The metal powder according to claim 6, wherein the predetermined temperature is a temperature of 100°C to 300°C.

8. The metal powder according to any one of claims 1 to 7, wherein the metal powder is a powder of a metal alloy produced by one of an atomization process and a plasma rotation electrode process.

9. The metal powder according to claim 8, wherein the metal alloy includes a nickel-based alloy, a cobalt-chrome alloy, an iron-based alloy, an aluminum alloy, a titanium alloy, a copper alloy, and a tungsten alloy.

10. A method of manufacturing a metal powder to be used for laminating and shaping a metal object, comprising:
producing the metal powder by an atomization process; and
executing mechanical treatment including collision treatment of the metal powder.

11. The method according to claim 10, wherein the mechanical treatment is performed by putting the metal powder into a jet mill or a ball mill.

12. The method according to claim 10 or 11, wherein the mechanical treatment is performed while heating the metal powder to a temperature of 100°C to 300°C.

13. The method according to claim 12, wherein the mechanical treatment is performed within an appropriate time range.

14. A metal laminating and shaping apparatus for lamination and shaping a metal object by selectively melting and solidifying a powder bed of a metal powder by an electron beam, comprising:
a mechanical treatment unit that performs mechanical treatment including collision treatment to the metal powder; and
a powder bed generator that generates the powder bed using the metal powder treated by said mechanical treatment unit.

15. The metal laminating and shaping apparatus according to claim 14, wherein said mechanical treatment unit includes a heater that heats, to a temperature of 100°C to 300°C, the metal powder to undergo the mechanical treatment.

16. The metal laminating and shaping apparatus according to claim 15, wherein the mechanical treatment is performed within an appropriate time range.

17. The metal laminating and shaping apparatus according to any one of claims 14 to 16, further comprising:
an acquirer that acquires heating temperature of the metal powder at which a capacitance component of an impedance measured for the metal powder becomes zero; and
a determiner that determines, based on the heating temperature acquired by said acquirer, whether it is necessary to perform the mechanical treatment to the metal powder,
wherein when said determiner determines that it is necessary to perform the mechanical treatment, said mechanical treatment unit performs the mechanical treatment including the collision treatment to the metal powder.

18. A program of controlling a metal laminating and shaping apparatus for laminating and shaping a metal object by selectively melting and solidifying a powder bed of a metal powder by an electron beam, for causing a computer to execute a method, comprising:
instructing a mechanical treatment unit to perform mechanical treatment including collision treatment to the metal powder; and
instructing a powder bed generator to generate the powder bed using the metal powder having undergone the mechanical treatment in accordance with the instructing the mechanical treatment unit.
